(19) Europäisches Patentamt / European Patent Office / Office européen des brevets

(11) **EP 4 449 806 B1**

(12) **EUROPEAN PATENT SPECIFICATION**

(45) Date of publication and mention
of the grant of the patent:
**10.09.2025   Bulletin 2025/37**

(51) International Patent Classification (IPC):
*H04W 72/12* (2023.01)      *H04W 72/30* (2023.01)
*H04W 72/56* (2023.01)      *H04W 72/1273* (2023.01)
*H04W 16/14* (2009.01)

(21) Application number: **22830955.5**

(22) Date of filing: **15.12.2022**

(52) Cooperative Patent Classification (CPC):
**H04W 72/1215; H04W 16/14; H04W 72/1273;
H04W 72/30; H04W 72/56**

(86) International application number:
**PCT/IB2022/062308**

(87) International publication number:
**WO 2023/111945 (22.06.2023 Gazette 2023/25)**

(54) **RADIO RESOURCE ARBITRATION ALGORITHM TO IMPROVE NR SPECTRAL EFFICIENCY FOR SPECTRUM SHARING**

FUNKRESSOURCENARBITRIERUNGSALGORITHMUS ZUR VERBESSERUNG DER NR-SPEKTRALEFFIZIENZ FÜR GEMEINSAME SPEKTRUMSNUTZUNG

ALGORITHME D'ARBITRAGE DE RESSOURCES RADIO POUR AMÉLIORER L'EFFICACITÉ SPECTRALE NR POUR LE PARTAGE DE SPECTRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:   **15.12.2021   US 202163289824 P**

(43) Date of publication of application:
**23.10.2024   Bulletin 2024/43**

(73) Proprietor: **Telefonaktiebolaget LM Ericsson (publ)
164 83 Stockholm (SE)**

(72) Inventors:
• **REN, Hong**
**Kanata, Ontario K2M 2X2 (CA)**
• **MANN, Karl D.**
**Ottawa, Ontario K2J 3C4 (CA)**
• **CHERIAN, Airin**
**Dallas, Texas 75240 (US)**

(74) Representative: **Murgitroyd & Company
165-169 Scotland Street
Glasgow G5 8PL (GB)**

(56) References cited:
**WO-A1-2020/167221      WO-A1-2021/246925**

• **URSULA CHALLITA ET AL: "Deep Reinforcement Learning for Dynamic Spectrum Sharing of LTE and NR", ARXIV.ORG, CORNELL UNIVERSITY LIBRARY, 201 OLIN LIBRARY CORNELL UNIVERSITY ITHACA, NY 14853, 22 February 2021 (2021-02-22), XP081890446**
• **ERICSSON: "LTE/NR spectrum sharing in band 48/n48", vol. RAN WG4, no. 20200224 - 20200306, 14 February 2020 (2020-02-14), XP051851304, Retrieved from the Internet <URL:https://ftp.3gpp.org/tsg_ran/WG4_Radio/TSGR4_94_e/Docs/R4-2001386.zip R4-2001386_n48_coex_rev2.docx> [retrieved on 20200214]**
• **LG ELECTRONICS: "Remaining details on DL sharing between LTE and NR", vol. RAN WG1, no. Prague, Czech Republic; 20170821 - 20170825, 20 August 2017 (2017-08-20), XP051316027, Retrieved from the Internet <URL:http://www.3gpp.org/ftp/Meetings_3GPP_SYNC/RAN1/Docs/> [retrieved on 20170820]**

## Description

Technical Field

The present disclosure relates to a cellular communication system and, more particularly, radio resource arbitration between two Radio Access Technologies (RATs) sharing the same spectrum.

Background

*LTE/NR Spectrum Sharing*

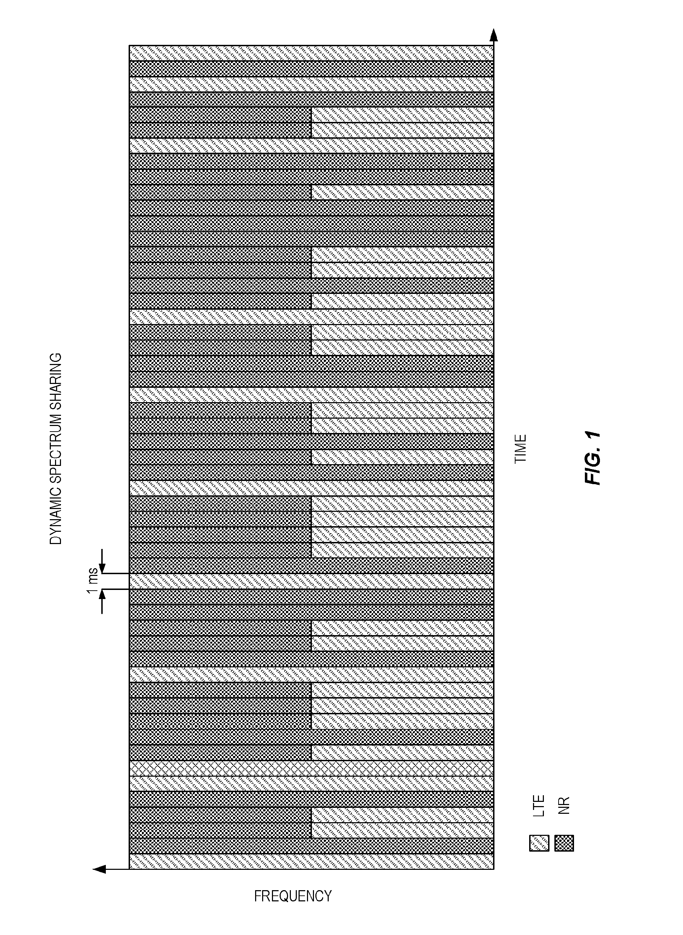

Wireless operators around the world have already started to deploy the latest Third Generation Partnership Project (3GPP) technology, New Radio (NR). When NR penetration is low at the beginning of the deployment, allocating a dedicated spectrum to NR can be a waste of radio resources when the spectrum cannot be fully utilized by NR. Spectrum sharing provides the capability to allow NR and Long Term Evolution (LTE) to share the same spectrum. Spectrum sharing enables operators to introduce NR while serving LTE User Equipments (UEs) in the same spectrum. Figure 1 illustrates one option for spectrum sharing. In this case, radio resources are dynamically allocated to NR and LTE in each subframe, where each subframe has a duration of 1 millisecond (ms).

*Resource Arbitration*

For spectrum sharing, the Resource Blocks (RBs) in the same spectrum are shared between LTE and NR. The RBs can be divided based on estimated demand from LTE and NR, and this is referred to as to "resource arbitration". The estimated demand can be expressed as the number of required RBs. For example, the resource arbitration can be performed before scheduling. Then, NR and LTE schedulers perform scheduling independently using the RBs assigned by the resource arbitration.

The resource arbitration can be done in the frequency domain in every subframe. It can also be performed in both time and frequency domains. For example, NR non-delay-sensitive traffic may be given a higher priority relative to LTE non-delay-sensitive traffic in one subframe. That is, the subframe may be assigned to NR alone if NR non-delay-sensitive traffic has enough demand. Similarly, LTE non-delay-sensitive traffic can be given a higher priority (relative to NR non-delay-sensitive traffic) in the next subframe so the subframe may be assigned to LTE if LTE non-delay-sensitive traffic has enough demand. When one Radio Access Technology (RAT) (e.g., NR) with higher priority does not have enough demand to utilize all RBs in a subframe, the remaining RBs can be assigned to the other RAT (e.g., LTE).

For spectrum sharing, some downlink subframes may be configured as LTE Multicast Broadcast Single Frequency Network (MBSFN) subframes. Each LTE MBSFN frame is divided into a non-MBSFN region and a MBSFN region. The non-MBSFN region spans the first one or two Orthogonal Frequency Division Multiplexing (OFDM) symbols in an MBSFN subframe, where LTE Cell-specific Reference Signal (CRS) and Physical Downlink Control Channel (PDCCH) can be transmitted. LTE CRS cannot be transmitted in the MBSFN region. LTE MBSFN subframes may be configured in case of spectrum sharing for two reasons. First, some NR channels/signals can be transmitted in the MBSFN region of an MBSFN subframe without conflicting with LTE channels/signals like LTE CRS. Secondly, NR Physical Downlink Shared Channel (PDSCH) can be transmitted in the MBSFN region of an MBSFN subframe. When NR PDSCH is transmitted in an MBSFN subframe, a higher spectral efficiency can be achieved since LTE CRS overhead is not present in the MBSFN region of an MBSFN subframes. Note that LTE transmission mode 3 (TM-3) or transmission mode 4 (TM-4) PDSCH are not transmitted in an MBSFN subframe.

WO2021246925A1 describes a computer implemented method for dynamically assigning communication resources (300, 400) between two or more radio access technologies, RAT, (145, 155, LTE, NR) in a wireless access network (100), the method comprising obtaining (SI) a network observation (ot) indicating a current state of the wireless access network (100), predicting (S3) a sequence of future states of the wireless access network (100) by simulating hypothetical communication resource assignments ($a^1$, $a^2$, $a^3$) over a time window (w) starting from the current state, and evaluating a reward function for each hypothetical communication resource assignment ($a^1$, $a^3$) over the time window (w), and dynamically assigning (S4) the communication resources (300, 400) based on the simulated hypothetical communication resource assignment ($a^1$) associated with maximized reward function over the time window (w) when the wireless access network (100) is in the current state.

In URSULA CHALLITA ET AL: "Deep Reinforcement Learning for Dynamic Spectrum Sharing of LTE and NR", 22. Feb. 2021, a proactive dynamic spectrum sharing scheme between 4G and 5G systems is proposed. In particular, a controller decides on the resource split between NR and LTE every subframe while accounting for future network states such as high interference subframes and multimedia broadcast single frequency network (MBSFN) subframes. To solve this problem, a deep reinforcement learning (RL) algorithm based on Monte Carlo Tree Search (MCTS) is proposed. The introduced deep RL architecture is trained offline whereby the controller predicts a sequence of future states of the wireless access network by simulating hypothetical bandwidth splits over time starting from the current network state.

In "LTE/NR spectrum sharing in band 48/n48", 3GPP DRAFT; R4-2001386, 3GPP, vol. RAN WG4, no. 20200224 - 20200306 14 February 2020, dynamic spectrum sharing is discussed that allows for sharing existing spectrum between the LTE and NR carriers, enabling smoother transition from LTE and faster adoption of NR, along with changes to support dynamic spectrum sharing in band 48/n48 frequency range.

WO2020167221A1 describes a network node configured to communicate with a wireless device, the network node comprising processing circuitry, the processing circuitry configured to cause the network node to: configure at least one reference signal of a first radio access technology to overlap in time with a Multimedia Broadcast Multicast Service Single Frequency Network, MBSFN, subframe of a second radio access technology.

In LG ELECTRONICS: "Remaining details on DL sharing between LTE and NR" (3GPP DRAFT; R1-1713219 - REMAINING DETAILS ON DL SHARING BETWEEN LTE AND NR, 3GPP, vol. RAN WG1, 2017-08-20), a number of proposals are made, including 1. when transmitting SS block in LTE MBSFN subframe, NR RMSI CORESET and RMSI PDSCH rate match SS block together with LTE PDCCH region, and 2., if NR supports stand-alone operation when NR carrier shares spectrum with LTE in TDM manner, it is necessary for NR CORESET rate match NR DMRS.

Summary

Systems and methods are disclosed for radio resource arbitration for spectrum sharing between different Radio Access Technologies (RATs). In one embodiment, a method performed by a network node for radio resource arbitration for spectrum sharing between a first RAT and a second RAT comprises, for a non-Multicast Broadcast Single Frequency Network (MBSFN) subframe, determining whether non-latency-sensitive traffic for the first RAT can be delayed to one or more next MBSFN subframes and, upon determining that non-latency-sensitive traffic for the first RAT can be delayed, determining an amount of non-latency-sensitive traffic for the first RAT to be delayed until the one or more next MBSFN subframes. By leveraging the results of this determining, improved spectral efficiency and throughput can be achieved.

In one embodiment, the one or more next MBSFN subframes are one or more next MBSFN subframes before a next non-MBSFN subframe for which non-latency-sensitive traffic for the first RAT has higher priority.

In one embodiment, determining whether non-latency-sensitive traffic for the first RAT can be delayed to the one or more next MBSFN subframes comprises determining whether non-latency-sensitive traffic for the first RAT can be delayed to the one or more next MBSFN subframes based on: (a) estimated total number of resource blocks, RBs, based on cell demand for both the first RAT and the second RAT relative to a number of RBs available to Physical Downlink Shared Channel (PDSCH) in the non-MBSFN subframe for a given system bandwidth, (b) number of RBs required to meet cell demand of non-latency-sensitive traffic for the first RAT, (c) estimated total number of RBs available for downlink traffic for the first RAT in the one or more next MBSFN subframes before the next non-MBSFN subframe for which non-latency-sensitive traffic for the first RAT has higher priority, (d) amount of time between the non-MBSFN subframe and the one or more next MBSFN subframes, or (e) a combination of any two or more of (a)-(d).

In one embodiment, determining whether non-latency-sensitive traffic for the first RAT can be delayed to the one or more next MBSFN subframes comprises determining an amount of overflow traffic and determining whether the amount of overflow traffic is greater than zero and whether a cell demand from non-delay sensitive traffic for the first RAT is greater than zero, wherein determining whether non-latency-sensitive traffic for the first RAT can be delayed comprises determining that non-latency sensitive traffic for the first RAT can be delayed responsive to determining that the amount of overflow traffic is greater than zero and that the cell demand from non-delay sensitive traffic for the first RAT is greater than zero.

In one embodiment, determining whether non-latency-sensitive traffic for the first RAT can be delayed to the next MBSFN subframe comprises determining an amount of overflow traffic and determining whether the amount of overflow traffic is greater than zero and whether a cell demand from non-delay sensitive traffic for the first RAT is greater than zero, wherein determining whether non-latency-sensitive traffic for the first RAT can be delayed comprises determining that non-latency sensitive traffic for the first RAT can be delayed responsive to determining that the amount of overflow traffic is greater than zero, the cell demand from non-delay sensitive traffic for the first RAT is greater than zero, and a delay until the next MBSFN subframe is either 1 or 2 subframes.

In one embodiment, the amount of overflow traffic is defined a cell demand from total downlink traffic for the first RAT including both delay-sensitive and non-delay-sensitive traffic plus a cell demand from total downlink traffic for the second RAT minus a number of RBs available to PDSCH in the non-MBSFN subframe.

In one embodiment, determining the amount of non-latency-sensitive traffic for the first RAT to be delayed comprises determining the amount of non-latency-sensitive traffic for the first RAT to be delayed based on: (i) estimated total number of resource blocks, RBs, based on cell demand for both the first RAT and the second RAT relative to a number of RBs available to PDSCH in the non-MBSFN subframe for a given system bandwidth, (ii) number of RBs required to meet cell demand of non-latency-sensitive traffic for the first RAT, (iii) estimated the total number of RBs available for downlink traffic for the first RAT in the one or more next MBSFN subframes before the next non-MBSFN subframe for which NR non-delay sensitive traffic has higher priority, (iv) amount of time between the non-MBSFN subframe and the one or more next MBSFN subframes, or (v) a combination of any two or more of (i)-(iv).

In one embodiment, determining the amount of non-latency-sensitive traffic for the first RAT to be delayed comprises estimating a total number of available RBs for non-delay-sensitive traffic for the first RAT in the one or more next MBSFN subframes before the next non-MBSFN subframe for which non-latency-sensitive traffic for the first RAT has higher priority and determining the amount of non-latency-sensitive traffic for the first RAT to be delayed based on the estimated number of available RBs for non-delay-sensitive traffic for the first RAT in the one or more next MBSFN subframes.

In one embodiment, estimating the number of available RBs for non-delay-sensitive traffic for the first RAT in the one or more next MBSFN subframes comprises estimating the number of available RBs for non-delay-sensitive traffic for the first RAT in the one or more next MBSFN subframes based on a number of RBs available in the one or more next MBSFN subframes for a physical downlink shared channel for the first RAT. In one embodiment, estimating the number of available RBs for non-delay-sensitive traffic for the first RAT in the one or more next MBSFN subframes is further based on a scaling factor that can be predefined or dynamically updated based on interference measurement. In one embodiment, estimating the number of available RBs for non-delay-sensitive traffic for the first RAT in the one or more next MBSFN subframes is further based on a predefined constant.

In one embodiment, estimating the number of available RBs for non-delay-sensitive traffic for the first RAT in the one or more next MBSFN subframes comprises estimating the number of available RBs for non-delay-sensitive traffic for the first RAT in the one or more next MBSFN subframes based on an average number of used RBs in the previous MBSFN subframes.

In one embodiment, estimating the number of available RBs for non-delay-sensitive traffic for the first RAT in the one or more next MBSFN subframes comprises estimating the number of available RBs for non-delay-sensitive traffic for the first RAT in the one or more next MBSFN subframes based on an estimated average number of RBs needed for new downlink traffic arrived each subframe for the first RAT.

In one embodiment, estimating the number of available RBs for non-delay-sensitive traffic for the first RAT in the one or more next MBSFN subframes comprises estimating the number of available RBs for non-delay-sensitive traffic for the first RAT in the one or more next MBSFN subframes based on an amount of time between the non-MBSFN subframe and the one or more next MBSFN subframes.

In one embodiment, determining the amount of non-latency-sensitive traffic for the first RAT to be delayed comprises determining the amount of non-latency-sensitive traffic for the first RAT to be delayed as a minimum value among: (A) amount of overflow traffic, (B) a cell demand for non-delay-sensitive traffic for the first RAT, and (C) the estimated total number of available RBs for non-delay-sensitive traffic for the first RAT in the one or more next MBSFN subframes before the next non-MBSFN subframe for which non-latency-sensitive traffic for the first RAT has higher priority.

In one embodiment, the method further comprises performing one or more additional actions for radio resource arbitration for the non-MBSFN subframe based on a reduced cell demand for non-delay-sensitive traffic for the first RAT, the reduced cell demand for non-delay-sensitive traffic for the first RAT being based on the determined amount of non-latency-sensitive traffic for the first RAT to be delayed.

In one embodiment, the non-MBSFN subframe is a non-MBSFN subframe for which a priority of non-delay-sensitive traffic for the first RAT is greater than a priority of non-delay-sensitive traffic for the second RAT.

In one embodiment, the first RAT is New Radio (NR), and the second RAT is Long Term Evolution (LTE).

Corresponding embodiments of a network node are also disclosed. In one embodiment, a network node for radio resource arbitration for spectrum sharing between a first RAT and a second RAT is adapted to, for a non- MBSFN subframe, determine whether non-latency-sensitive traffic for the first RAT can be delayed to one or more next MBSFN subframes and, upon determining that non-latency-sensitive traffic for the first RAT can be delayed, determine an amount of non-latency-sensitive traffic for the first RAT to be delayed until the one or more next MBSFN subframes.

In one embodiment, a network node for radio resource arbitration for spectrum sharing between a first RAT and a second RAT comprises processing circuitry configured to cause the network node to, for a non- MBSFN subframe, determine whether non-latency-sensitive traffic for the first RAT can be delayed to one or more next MBSFN subframes and, upon determining that non-latency-sensitive traffic for the first RAT can be delayed, determine an amount of non-latency-sensitive traffic for the first RAT to be delayed until the one or more next MBSFN subframes.

In one embodiment, a non-transitory computer-readable medium comprising instructions executable by processing circuitry of a network node for radio resource arbitration for spectrum sharing between a first radio access technology, RAT, and a second RAT, whereby the network node is caused to, for a non-MBSFN subframe, determine whether non-latency-sensitive traffic for the first RAT can be delayed to one or more next MBSFN subframes and, upon determining that non-latency-sensitive traffic for the first RAT can be delayed, determine an amount of non-latency-sensitive traffic for the first RAT to be delayed until the one or more next MBSFN subframes.

Brief Description of the Drawings

The accompanying drawing figures incorporated in and forming a part of this specification illustrate several aspects of the disclosure, and together with the description serve to explain the principles of the disclosure.

Figure 1 illustrates one option for spectrum sharing between Long Term Evolution (LTE) and New Radio (NR);
Figure 2 illustrates one example of a cellular communications system in which embodiments of the present disclosure may be implemented;
Figure 3 illustrates examples of a subframe pattern for resource arbitration;
Figure 4 illustrates another example subframe pattern for resource arbitration;
Figure 5 is a flow chart that illustrates an arbitration procedure in accordance with one embodiment of the present disclosure;
Figures 6, 7, and 8 are schematic block diagrams of example embodiments of a network node;
Figure 9 illustrates an example embodiment of a communication system in which embodiments of the present disclosure may be implemented;
Figure 10 illustrates an example embodiment of a host computer, base station, and a User Equipment (UE) in which embodiments of the present disclosure may be implemented;
Figures 11, 12, 13, and 14 are flow charts that illustrate example embodiments of procedures that may be performed in the system of Figure 9 or Figure 10 in accordance with some embodiments of the present disclosure.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

There currently exist certain challenge(s). As described above, LTE Multicast Broadcast Single Frequency Network (MBSFN) subframes may be configured in case of spectrum sharing to improve NR spectral efficiency. However, Resource Block (RB) resources in MBSFN subframes can be wasted if there is not enough NR downlink (DL) traffic to utilize all RBs in MBSFN subframes given that LTE DL traffic cannot be scheduled in MBSFN subframes.

A simple solution would be to assign only MBSFN subframes to NR DL so that all NR DL traffic is scheduled in MBSFN subframes. This of course is best for NR spectral efficiency. However, it has the following problems:

- NR DL traffic delay is increased,
- NR DL throughput is limited by the number of configured MBSFN subframes, and
- RB resources in non-MBSFN subframes may be wasted when LTE DL demand is not enough to utilize all RBs.

Certain aspects of the present disclosure and their embodiments may provide solutions to the aforementioned or other challenges. Systems and methods are disclosed herein for optimizing NR spectral efficiency while minimizing the impact to NR DL delay when LTE MBSFN subframes are configured in the case of spectrum sharing.

In one embodiment, for a non-MBSFN subframe in which NR DL non-delay-sensitive traffic has higher priority (i.e., higher priority than LTE DL non-delay-sensitive traffic), a determination is made as to whether NR DL non-delay-sensitive traffic should be delayed and, if so, how much NR DL non-delay-sensitive traffic should be delayed based on factors including one or more of the following factors:

- estimated total number of RBs based on NR and LTE DL demand (i.e., estimated number of RBs needed to carry the existing NR and LTE downlink traffic), relative to the number of available RBs in the subframe given the bandwidth (e.g., relative to the number of RBs available to PDSCH of the first RAT or the second RAT in the subframe given the bandwidth),
- number of RBs required to meet NR DL demand due to NR DL non-delay-sensitive traffic,
- estimated total number of RBs available for NR DL traffic in the next MBSFN subframe(s) before the next non-MBSFN subframe for which NR DL non-delay-sensitive traffic has higher priority,
- amount of time between the current non-MBSFN subframe and the next MBSFN subframe(s).

Note that, in one scenario, only NR can use MBSFN for DL. In this scenario, by maximizing the use of MBSFN subframes for NR, spectral efficiency for NR is increased due to less LTE CRS overhead in MBSFN subframes. In addition, LTE throughput is improved since we free more resources for LTE when we maximize the use of MBSFN subframes for NR. Further, in one embodiment, only non-delay sensitive traffic is delayed.

In comparison to an approach that blindly delays all NR DL non-delay-sensitive traffic as long as LTE can fully utilize a non-MBSFN subframe, embodiments of the proposed solution determine the amount of NR DL traffic to be delayed in an intelligent way. Embodiments of the present disclosure may include one or more of the following aspects:

- estimation of the number of RBs available for NR DL traffic in the next MBSFN subframe(s),
- determination of the amount NR DL non-delay-sensitive traffic to be delayed based on factors including, for example, one or more of the following: demand overflow, NR demand due to non-delay-sensitive traffic, and estimated number of RBs available for NR DL traffic in the next MBSFN subframe(s).

Certain embodiments may provide one or more of the following technical advantage(s):

- Improved NR spectral efficiency and throughput,
- Increased throughput and decreased delay for LTE non-delay-sensitive traffic,
- Reduced impact on NR DL delay as compared to simpler ways of delaying NR, and
- Reduced RB waste in non-MBSFN subframes

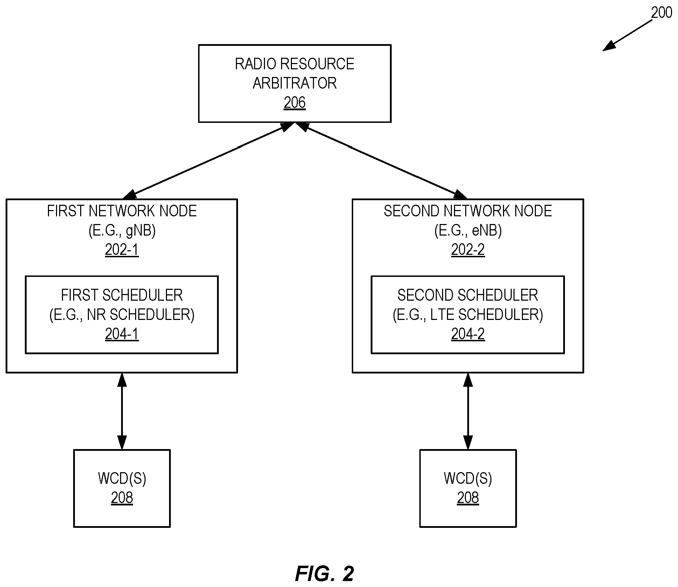

Figure 2 illustrates one example of a cellular communications system 200 in which embodiments of the present disclosure may be implemented. In the embodiments described herein, the cellular communications system 200 implements spectrum sharing between two Radio Access Technologies (RATs), which in the example embodiments described herein are NR and LTE; however, the solutions described herein are not limited thereto. In this example, cellular communications system 200 includes a first network node 202-1 and a second network node 202-2. The first network node 202-1 provides radio access in accordance with a first RAT (e.g., NR) and has a first scheduler 204-1 (e.g., an NR scheduler), and the second network node 202-2 provides radio access in accordance with a second RAT (e.g., LTE) and has a second scheduler 204-2 (e.g., an LTE scheduler). In one example embodiment, the first network node 202-1 is a gNB or a RAN node that implements at least part of the functionality of the gNB (e.g., a gNB-DU), and the second network node 202-2 is an eNB or RAN node that implements at least part of the functionality the eNB. The cellular communications system 200 also includes a radio resource arbitrator 206. While illustrated as being separate from the first network node 202-1 and the second network node 202-2 in Figure 2, the radio resource arbitrator 206 may be, for example, implemented in a separate network node, implemented in either the first network node 202-1 or the second network node 202-2, or implemented in a distributed manner across the first network node 202-1 and the second network node 202-2 (e.g., include a first component implemented at the first network node 202-1 and a second component implemented at the second network node 202-2). Also, while shown as separate network nodes, the functionality of the first and second network nodes 202-1 and 202-2 may be implemented in a single network node (i.e., can coexist on the same hardware).

The first and second network nodes 202-1 and 202-2 provide service to wireless communication devices 208. In the following description, the wireless communication devices 208 are oftentimes UEs and as such sometimes referred to herein as UEs 208, but the present disclosure is not limited thereto.

Systems and methods are disclosed herein for optimizing NR spectral efficiency while minimizing the impact to NR DL delay when LTE MBSFN subframes are configured in the case of spectrum sharing. In one embodiment, for a non-MBSFN subframe in which NR has higher priority (i.e., higher priority than LTE), a determination is made as to whether NR DL non-delay-sensitive traffic should be delayed and, if so, how much NR DL non-delay-sensitive traffic should be delayed based on factors including one or more of the following factors:

- estimated total number of RBs based on NR and LTE DL demand (i.e., estimated number of RBs needed to carry the existing NR and LTE downlink traffic, which may also be described as the estimated number of RBs expected to be scheduled for NR and LTE downlink traffic), relative to the number of available RBs in the subframe given the bandwidth (e.g., relative to the number of RBs available to PDSCH in the subframe given the bandwidth),
- number of RBs required to meet NR DL demand due to NR DL non-delay-sensitive traffic,
- estimated total number of RBs available for NR DL traffic in the next MBSFN subframe(s) before the next non-MBSFN subframe for which NR DL non-delay-sensitive traffic has higher priority,
- amount of time between the non-MBSFN subframe and the next MBSFN subframe.

Conceptually, spectrum sharing involves three components: the radio resource arbitrator 206, the first scheduler 204-1, and the second scheduler 204-2. Note that these three components are only an example, and the methods disclosed herein may be applied to other variations of how spectrum sharing is implemented. For the description below, the focus is on the downlink. Further, the description below focuses on NR and LTE spectrum sharing. As such, the first scheduler 204-1 is hereinafter referred to as the "NR scheduler 204-1", and the second scheduler 204-2 is hereinafter referred to as the "LTE scheduler 204-2".

For each subframe, the NR scheduler 204-1 and the LTE scheduler 204-2 estimate cell demand in terms of number of RBs they need based on the amount of traffic (e.g., the amount of DL traffic stored in associated buffers) for the UEs 212 they plan to serve. The cell demand can be estimated for traffic with different Quality of Service (QoS) requirements. Non-delay-sensitive traffic is the focus for the preferred embodiments described herein; however, the embodiments disclosed herein are not limited thereto. The radio resource arbitrator 206 determines how to divide available RBs in the subframe (e.g., for a given system bandwidth) between NR and LTE, and informs the NR and LTE schedulers 204-1 and 204-2 about its decision.

The following parameters are defined herein:

- $D_{NR}$: demand from total NR DL traffic in terms of number of RBs (assuming LTE CRS overhead in non-MBSFN subframes), including both delay-sensitive and non-delay-sensitive traffic. "Demand" may be expressed as the estimated number of RBs needed to carry the existing traffic (e.g., current traffic and possibly unsent, past traffic), which for $D_{NR}$ is the existing NR downlink traffic including both delay-sensitive and non-delay-sensitive traffic.

- $D_{NR}^{NS}$: demand from non-delay-sensitive NR DL traffic in terms of number of RBs (assuming LTE CRS overhead in non-MBSFN subframes)

- $A_{NR}$: the estimated number of RBs needed for new NR DL traffic that arrives in one subframe (assuming LTE CRS overhead in non-MBSFN subframes)

- $D_{LTE}$: demand from total LTE DL in terms of number of RBs

- $D_{Reduction}$: the reduction of NR demand (i.e., the amount of non-delay-sensitive DL NR traffic to be delayed).

- $D_{Overflow}$: the demand overflow comparing to the total number of available RBs for a given system bandwidth. In other words, $D_{Overflow} = D_{NR} + D_{LTE} - N_{Avial}$.

- $N_{Used}^{MBSFN}$: the average number of used RBs in each MBSFN subframe. In one embodiment, this is based on a moving window average of used RBs in MBSFN subframes. Higher weight may be used for newer samples.

- $N_{Avial}$: the number of available RBs for non-delay-sensitive traffic in a given subframe. More specifically, here, is the number of RBs available for NR PDSCH or LTE PDSCH in a given subframe. For example, if rate matching around NR SSB is not performed in MBSFN subframes, the RBs occupied by NR SSB are not available to NR PDSCH. Thus, the number of RBs available for NR PDSCH in MBSFN subframes containing NR SSB is the NR system bandwidth minus the RBs occupied by NR SSB.

- $N_{BW}$: the number of RBs for the given system bandwidth.

- $M_{Avail}^{MBSFN}(n + x)$: the estimated number of available RBs for non-delay-sensitive traffic in a coming MBSFN subframe with subframe index $n + x$.

- $g$: a scaling factor. An RB in a MBSFN subframe is equivalent to more than 1 RB in non-MBSFN subframe due to: (1) no LTE CRS overhead in MBSFN subframes and (2) potentially lower interference in MBSFN subframes. The scaling factor depends on the number of LTE CRS ports and the difference of interference level between MBSFN subframes and non-MBSFN subframes.

- $n$: the subframe index for the subframe whose RB resource is arbitrated.

- n + $d$: the subframe index for the closest MBSFN subframe in the future where d is the number of subframes before the next MBSFN subframe

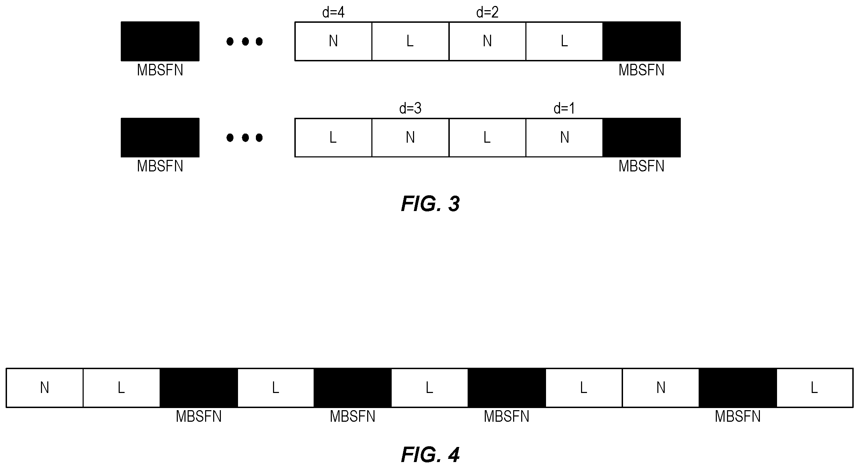

Assuming the resource arbitration is done in both time and frequency domains, some examples of a subframe pattern are shown in Figure 3. In Figure 3, each box represents a subframe. The shaded boxes represent MBSFN subframes and the white boxes represent non-MBSFN subframes. The subframes with letter "N" are the non-MBSFN subframes in which NR DL non-delay-sensitive traffic has higher priority than LTE. Similarly, the subframes with letter "L" are the non-MBSFN subframes in which LTE DL non-delay-sensitive traffic has higher priority than NR. Again, MBSFN subframes are only assigned to NR.

Two example embodiments of the arbitration procedure performed by the radio resource arbitrator 206 are described below.

*Example Arbitration Procedure #1*

The first example arbitration procedure ("Example Arbitration Procedure #1") performed by the radio resource arbitrator 206 is as follows:

- If (NR DL non-delay-sensitive traffic has higher priority than LTE DL non-delay-sensitive traffic in subframe n) && {(d == 1) ‖ (d ==2)}

  ○

$$D_{Overflow} = D_{NR} + D_{LTE} - N_{Avial}$$

○ If

$$(D_{Overflow} > 0) \,\&\&\, (\, D_{NR}^{NS} \; > 0\,)$$

■ Estimate the number of available RBs for non-delay-sensitive traffic in the coming MBSFN subframe with subframe index n+d.

$$M_{Avail}^{MBSFN}(n + d) = c(d) * g * N_{Avial}(n + d)$$

where c(d) is a constant for the given d (which may be predefined, e.g., in software)

■

$$D_{Reduction} = \min\{D_{Overflow}, \; D_{NR}^{NS}, \, \text{sum}(M_{Avail}^{MBSFN}(n + d)) \,\}$$

where the sum applies when there are multiple MBSFN subframes before the next non-MBSFN subframe for which NR non-delay sensitive traffic has higher priority.

■ $Modified\_demand_{NR}^{NS} == D_{NR}^{NS} - D_{Reduction}$. This $Modified\_demand_{NR}^{NS}$ will be the input to the arbitrator that represents the demand for NR non-delay sensitive traffic.

○ End if

• End if

Note that the priority between NR and LTE traffic in a subframe may be predefined or configurable. If configurable, this may, in one embodiment, be configured in a dynamic matter.

Below are some examples for method #1, assuming:

• d = 1 and c(1) = 1
• g = 1
• No RBs are used for signals/channels other than NR PDSCH
• There is only one coming MBSFN subframe (no multiple consecutive MBSFN subframes)
• $N_{Avial} = N_{BW}$

**Example 1:**

• $D_{NR}$ = 0.2 * $N_{Avial}$
• $D_{LTE}$ = 0.5 * $N_{Avial}$
• As a result, $D_{Overflow}$ < 0 and $D_{Reduction}$ = 0. When there is no contention, NR DL traffic is not delayed.

**Example 2:**

• $D_{NR}$ = 1.5 * $N_{Avial}$
• $D_{LTE}$ = 0.8 * $N_{Avial}$
• As a result, $D_{Overflow}$ > 0 and $D_{Reduction}$ = $N_{BW}$. The modified NR demand becomes $Modified\_demand_{NR}^{NS} = 0.5 * N_{BW}$. This means part of NR DL traffic (0.5 * $N_{BW}$) can be scheduled in this non-MBSFN subframe and the remaining traffic is delayed to the coming MBSFN subframe. Given the NR demand (1.5 * $N_{BW}$) can't be satisfied by one PDSCH transmission, the proposed solution likely will not increase NR delay while improving NR spectral efficiency.

*Example Arbitration Procedure #2*

The second example arbitration procedure ("Example Arbitration Procedure #2") performed by the radio resource arbitrator 206 is as follows. It can be seen that Example Arbitration Procedure #1 only applies special handling in the non-MBSFN subframe that is one or two subframes ahead of an MBSFN subframe. Example Arbitration Procedure #2 is more general, and it applies to all non-MBSFN subframes ahead of an MBSFN subframe.

For Example Arbitration Procedure #2, a function of delay is introduced. The delay is basically the amount of time between the considered non-MBSFN subframe and the coming MBSFN subframe in the future. This function is denoted as $f(d)$. This delay function is used to estimate the number of RBs in the coming MBSFN subframe that are available to carry NR DL traffic seen now (e.g., available to carry NR DL traffic currently in the buffer of the first network node 202-1).

There are different ways to estimate the number of RBs in the coming MBSFN subframe that are available to carry NR DL traffic seen now (denoted as $M_{Avail}^{MBSFN}$). A few example options are described below.

**Option 1:** $M_{Avail}^{MBSFN}$ is estimated based on $N_{Used}^{MBSFN}$. Specifically, the formula is shown below:

$$M_{Avail}^{MBSFN}(n + x) = g * N_{BW} * \{N_{BW} - f(x) * N_{Used}^{MBSFN}(m) - \text{RBs cannot be used for NR PDSCH}\}$$

The average number of RB used in MBSFN subframes can be calculated as:

$$N_{Used}^{MBSFN}(m) = (RBs\ used\ in\ MBSFN\ subframe\ l) * forgetting\ factor + N_{Used}^{MBSFN}(m - 1) \\ * (1 - forgetting\ factor)$$

It is updated after every MBSFN subframe. The most recent $N_{Used}^{MBSFN}(m)$ is used to calculate $M_{Avail}^{MBSFN}(n + x)$. In this method, the same $N_{Used}^{MBSFN}(m)$ is used for all x values. It is expected that $M_{Avail}^{MBSFN}(n + x)$ would decrease with x since new NR traffic may arrive. A delay function f(x) is introduced to simulate this trend. The delay function $f(x)$ is a non-decreasing function. Assuming a maximum delay of D = 7, the function can be defined, for example, by the table below.

| X | 1 | 2 | 3 | 4 | 5 | 6 | 7 |
|------|-----|-----|-----|-----|-----|-----|-----|
| f(x) | 0.1 | 0.2 | 0.3 | 0.4 | 0.5 | 0.6 | 0.7 |

The function can be defined in other ways. One special case is $f(x) = 1$ for all $x$ values.

**Option 2:** $M_{Avail}^{MBSFN}$ is estimated based on $A_{NR}$. In this case, $A_{NR}$ is obtained based on the history. The new NR DL traffic that arrives in a subframe is basically:
Traffic at the beginning of the next subframe - (Traffic at the beginning of this subframe - traffic transmitted in this subframe)
The number of RBs needed to transmit this amount of traffic can be derived based on the current DL link quality for the UE. This RB numbers for past subframes can be used to estimate the RB numbers for the future subframes. It can be computed as weighted moving average with recent samples having higher weights. One way to calculate the average of $A_{NR}$ is:

$$A_{avg}^{NR}(n) = A_{NR}(n) * forgetting\ factor + A_{avg}^{NR}(n - 1) * (1 - forgetting\ factor)$$

The formula is:

$$M_{Avail}^{MBSFN}(n + x) = \max\{0, g * (N_{BW} - x * A_{avg}^{NR}(n) - \text{RBs cannot be used for NR PDSCH})\}$$

With this option, one can see that $M_{Avail}^{MBSFN}(n + x)$ decreases with *x.*

**Option 3:** $M_{Avail}^{MBSFN}$ is estimated based on delay only. In this case, the formula is:

$$M_{Avail}^{MBSFN}(n + x) = g * f2(x) * (N_{BW} - \text{RBs cannot be used for NR PDSCH})$$

In this case, the delay function $f2(x)$ is a non-increasing function. For example, the function can be defined by the table below.

| X | 1 | 2 | 3 | 4 | 5 | 6 | 7 |
|---|---|---|---|---|---|---|---|
| f2(x) | 0.9 | 0.8 | 0.7 | 0.6 | 0.5 | 0.4 | 0.4 |

With this formula, the number of available RBs does not depend on the average MBSFN RB utilization or the average new NR traffic that arrives each subframe. It is a simple method. However, it follows a trend that $M_{Avail}^{MBSFN}(n+x)$ decreases with $x$.

Regardless of which option is used to estimate $M_{Avail}^{MBSFN}$, Example Arbitration Procedure #2 can be described as follows:

- If NR DL non-delay-sensitive traffic has higher priority than LTE DL non-delay-sensitive traffic in subframe n

  ○

$$D_{Overflow} = D_{NR} + D_{LTE} - N_{Avial}$$

  ○ If

$$(D_{Overflow} > 0) \ \&\& \ ( D_{NR}^{NS} > 0 )$$

  ▪ Estimate the number of available RBs for non-delay-sensitive traffic in the coming MBSFN subframe with subframe index n+d.

  • $M_{Avail}^{MBSFN}(n+d)$ can be obtained with any of the options described above

  ▪

$$D_{Reduction} = \min\{D_{Overflow}, D_{NR}^{NS}, \mathrm{sum}(M_{Avail}^{MBSFN}(n+d)) \}$$

  where the sum applies when there are multiple MBSFN subframes before the next non-MBSFN subframe for which NR non-delay sensitive traffic has higher priority. For example, in Figure 4, when applying this process to the first subframe, there are three MBSFN subframes before the next non-MBSFN subframe for which NR non-delay sensitive traffic has higher priority, and d equals to 2, 4, and 6, respectively. The boxes in black represent MBSFN subframes. The boxes in white represent non-MBSFN subframes. The "N" in the white box indicates NR non-delay sensitive traffic has higher priority in the subframe while the "L" in the white box indicates LTE non-delay sensitive traffic has higher priority in the subframe.

  ▪ $Modified \ demand_{NR}^{NS} = D_{NR}^{NS} - D_{Reduction}$. This $Modified\_demand_{NR}^{NS}$ will be the input to the arbitrator that represent the demand for NR non-delay sensitive traffic.

  ○ End if

- End if

*Further Description*

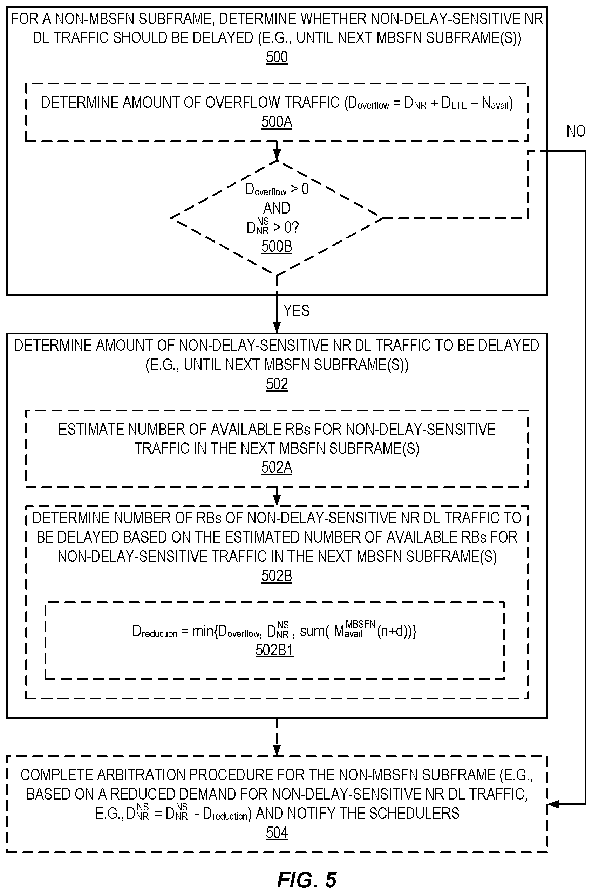

Figure 5 is a flow chart that illustrates an arbitration procedure in accordance with one embodiment of the present disclosure. Optional steps are represented by dashed lines/boxes. This procedure is performed by the radio resource arbitrator 206. As illustrated, for a non-MBSFN subframe, the radio resource arbitrator 206 determines whether non-delay-sensitive NR DL traffic can be delayed (step 500). In one embodiment, the determination made in step 500 may be based on one or more factors including: (a) estimated total number of RBs based on NR and LTE DL demand relative to the number of RBs available to PDSCH in the subframe for a given system bandwidth, (b) number of RBs required to meet NR DL demand due to non-delay sensitive traffic, (c) estimated total number of RBs available for NR DL traffic in the next MBSFN subframe(s) before the next non-MBSFN subframe(s) for which NR non-delay sensitive traffic has higher priority, (d) amount of time between the non-MBSFN subframe and the next MBSFN subframe(s), or (e) a combination of any two or more of (a) - (d).

More specifically, as described above with respect to the Example Arbitration Procedure #1 and Example Arbitration Procedure #2, in one embodiment, the radio resource arbitrator 206 determines whether non-delay-sensitive NR DL traffic can be delayed as follows. The radio resource arbitrator 206 determines an amount of overflow traffic (i.e., determines $D_{Overflow} = D_{NR} + D_{LTE} - N_{Avial}$, as described above) (step 500A). The radio resource arbitrator 206 determines whether the amount of overflow traffic is greater than zero (i.e., $D_{Overflow} > 0$) and the demand from non-delay-sensitive NR DL traffic is greater than zero (i.e., $D_{NR}^{NS} > 0$) (step 500B). If not, non-delay-sensitive NR DL traffic cannot be delayed and the procedure proceeds to step 504. Otherwise, non-delay-sensitive NR DL traffic can be delayed. Note that, for Example Arbitration Procedure #1, the decision in step 500B also considers with the delay (d) until the next MBSFN subframe is either 1 or 2 subframes, as described above.

Upon determining that non-delay-sensitive NR DL traffic can be delayed (step 500, YES), the radio resource arbitrator 206 determines the amount of non-delay-sensitive NR DL traffic to be delayed (step 502). This can be determined using any suitable technique. In one embodiment, the determination made in step 502 may be based on one or more factors including: (a) estimated total number of RBs based on NR and LTE DL demand relative to the number of RBs available to PDSCH in the subframe for a given system bandwidth, (b) number of RBs required to meet NR DL demand for non-delay sensitive traffic, (c) estimated total number of RBs available for NR DL traffic in the next MBSFN subframe(s) before the next non-MBSFN subframe for which NR non-delay sensitive traffic has higher priority, (d) amount of time between the non-MBSFN subframe and the next MBSFN subframe(s), or (e) a combination of any two or more of (a) - (d).

More specifically, as described above with respect to the Example Arbitration Procedure #1 and Example Arbitration Procedure #2, in one embodiment, the radio resource arbitrator 206 determines the amount of non-delay-sensitive NR DL traffic that can be delayed as follows. The radio resource arbitrator 206 estimates the number of available RBs for non-delay-sensitive traffic in the next MBSFN subframe(s) (i.e., with subframe index n+d), as described above (step 502A). The manner in which this estimate is made is described above in detail and is therefore not repeated here. Note, however, that numerous options are described above. The radio resource arbitrator 206 determines the amount of non-delay-sensitive NR DL traffic that can be delayed based on the estimated number of available RBs for non-delay-sensitive traffic in the next MBSFN subframe(s) (step 502B). For example, in one embodiment, the amount of non-delay-sensitive NR DL traffic that can be delayed is $D_{Reduction} = \min\{D_{Overflow}, D_{NR}^{NS}, \text{sum}(M_{Avail}^{MBSFN}(n+d))\}$, where the sum applies when there are multiple MBSFN subframes before the next non-MBSFN subframe(s) for which NR non-delay sensitive traffic has higher priority, as described above (step 502B1).

The radio resource arbitrator 206 then continues the radio resource arbitration process and notifies the schedulers 204-1 and 204-2 of the results (step 504). For example, if the non-delay-sensitive NR DL traffic can be delayed, the radio resource arbitrator 206 continues the arbitration process based on a reduced demand from non-delay-sensitive NR DL traffic, e.g., based on $D_{NR}^{NS} = D_{NR}^{NS} - D_{Reduction}$. For instance, the radio resource arbitrator 206 may use the reduced NR demand to determine the number of RBs assigned to NR.

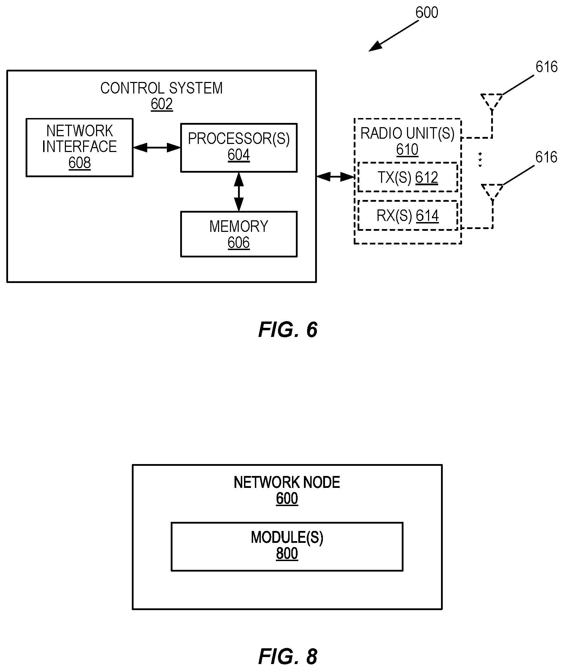

Figure 6 is a schematic block diagram of a network node 600 (e.g., the first network node 202-1 or the second network node 202-2 or a network node implementing the radio resource arbitrator 206) according to some embodiments of the present disclosure. Optional features are represented by dashed boxes. The network node 600 may be, for example, a base station (e.g., a gNB or eNB) or a network node that implements all or part of the functionality of a base station. As illustrated, the network node 600 includes a control system 602 that includes one or more processors 604 (e.g., Central Processing Units (CPUs), Application Specific Integrated Circuits (ASICs), Field Programmable Gate Arrays (FPGAs), and/or the like), memory 606, and a network interface 608. The one or more processors 604 are also referred to herein as processing circuitry. In addition, if the network node 600 is a radio access node (e.g., a base station), the network node 600 may include one or more radio units 610 that each includes one or more transmitters 612 and one or more receivers 614 coupled to one or more antennas 616. The radio units 610 may be referred to or be part of radio interface circuitry. In some embodiments, the radio unit(s) 610 is external to the control system 602 and connected to the control system 602 via, e.g., a wired connection (e.g., an optical cable). However, in some other embodiments, the radio unit(s) 610 and potentially the antenna(s) 616 are integrated together with the control system 602. The one or more processors 604 operate to provide one or more functions of a network node (e.g., network node 202-1 or 202-2 or a network node that implements the radio resource arbitrator 206) as described herein. In some embodiments, the function(s) are implemented in software that is stored, e.g., in the memory 606 and executed by the one or more processors 604.

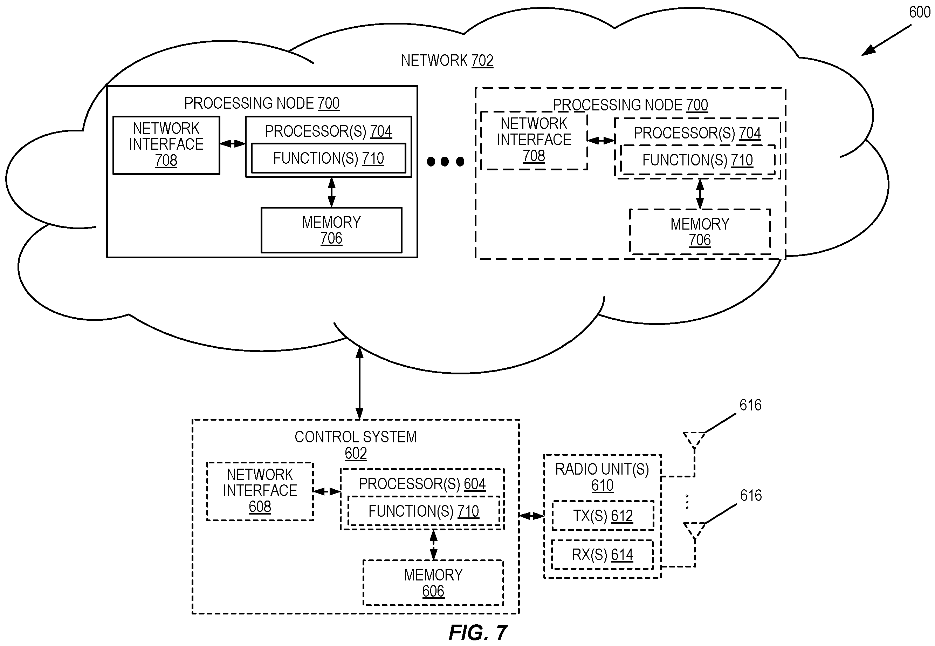

Figure 7 is a schematic block diagram that illustrates a virtualized embodiment of the network node 600 according to some embodiments of the present disclosure. Again, optional features are represented by dashed boxes. As used herein, a "virtualized" network node is an implementation of the network node 600 in which at least a portion of the functionality of the network node 600 is implemented as a virtual component(s) (e.g., via a virtual machine(s) executing on a physical processing node(s) in a network(s)). As illustrated, in this example, if the network node 600 is a radio access node, the network node 600 may include the control system 602 and/or the one or more radio units 610, as described above. The network node 600 includes one or more processing nodes 700 coupled to or included as part of a network(s) 702. If present, the control system 602 or the radio unit(s) are connected to the processing node(s) 700 via the network 702. Each processing node 700 includes one or more processors 704 (e.g., CPUs, ASICs, FPGAs, and/or the like), memory 706, and a network interface 708.

In this example, functions 710 of the network node 600 described herein (e.g., network node 202-1 or 202-2 or a network node that implements the radio resource arbitrator 206) are implemented at the one or more processing nodes 700 or distributed across the one or more processing nodes 700 and the control system 602 and/or the radio unit(s) 610 in any desired manner. In some particular embodiments, some or all of the functions 710 of the network node 600 described herein are implemented as virtual components executed by one or more virtual machines implemented in a virtual environment(s) hosted by the processing node(s) 700. As will be appreciated by one of ordinary skill in the art, additional signaling or communication between the processing node(s) 700 and the control system 602, if present, may be used in order to carry out at least some of the desired functions 710. Notably, in some embodiments, the control system 602 may not be included, in which case the radio unit(s) 610 communicate directly with the processing node(s) 700 via an appropriate network interface(s).

In some embodiments, a computer program including instructions which, when executed by at least one processor, causes the at least one processor to carry out the functionality of the network node 600 or a node (e.g., a processing node 700) implementing one or more of the functions 710 of the network node 600 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 8 is a schematic block diagram of the network node 600 according to some other embodiments of the present disclosure. The network node 600 includes one or more modules 800, each of which is implemented in software. The module(s) 800 provide the functionality of the network node 600 described herein. This discussion is equally applicable to the processing node 700 of Figure 7 where the modules 800 may be implemented at one of the processing nodes 700 or distributed across multiple processing nodes 700 and/or distributed across the processing node(s) 700 and the control system 602.

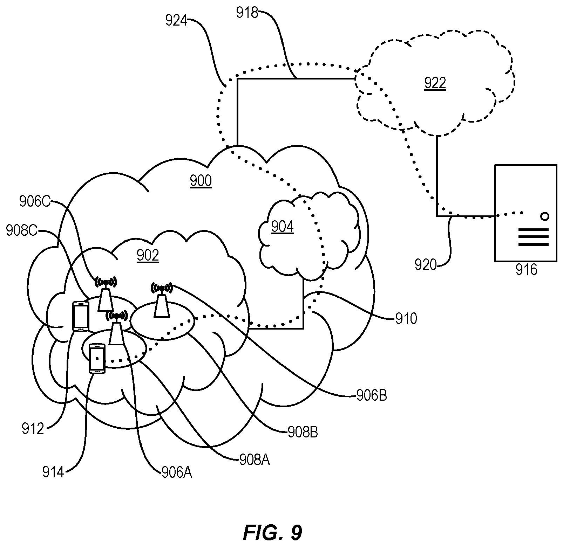

With reference to Figure 9, in accordance with an embodiment, a communication system includes a telecommunication network 900, such as a 3GPP-type cellular network, which comprises an access network 902, such as a RAN, and a core network 904. The access network 902 comprises a plurality of base stations 906A, 906B, 906C, such as Node Bs, eNBs, gNBs, or other types of wireless Access Points (APs), each defining a corresponding coverage area 908A, 908B, 908C. Each base station 906A, 906B, 906C is connectable to the core network 904 over a wired or wireless connection 910. A first UE 912 located in coverage area 908C is configured to wirelessly connect to, or be paged by, the corresponding base station 906C. A second UE 914 in coverage area 908A is wirelessly connectable to the corresponding base station 906A. While a plurality of UEs 912, 914 are illustrated in this example, the disclosed embodiments are equally applicable to a situation where a sole UE is in the coverage area or where a sole UE is connecting to the corresponding base station 906.

The telecommunication network 900 is itself connected to a host computer 916, which may be embodied in the hardware and/or software of a standalone server, a cloud-implemented server, a distributed server, or as processing resources in a server farm. The host computer 916 may be under the ownership or control of a service provider, or may be operated by the service provider or on behalf of the service provider. Connections 918 and 920 between the telecommunication network 900 and the host computer 916 may extend directly from the core network 904 to the host computer 916 or may go via an optional intermediate network 922. The intermediate network 922 may be one of, or a combination of more than one of, a public, private, or hosted network; the intermediate network 922, if any, may be a backbone network or the Internet; in particular, the intermediate network 922 may comprise two or more sub-networks (not shown).

The communication system of Figure 9 as a whole enables connectivity between the connected UEs 912, 914 and the host computer 916. The connectivity may be described as an Over-the-Top (OTT) connection 924. The host computer 916 and the connected UEs 912, 914 are configured to communicate data and/or signaling via the OTT connection 924, using the access network 902, the core network 904, any intermediate network 922, and possible further infrastructure (not shown) as intermediaries. The OTT connection 924 may be transparent in the sense that the participating communication devices through which the OTT connection 924 passes are unaware of routing of uplink and downlink communications. For example, the base station 906 may not or need not be informed about the past routing of an incoming downlink communication with data originating from the host computer 916 to be forwarded (e.g., handed over) to a connected UE 912. Similarly, the base station 906 need not be aware of the future routing of an outgoing uplink communication originating from the UE 912 towards the host computer 916.

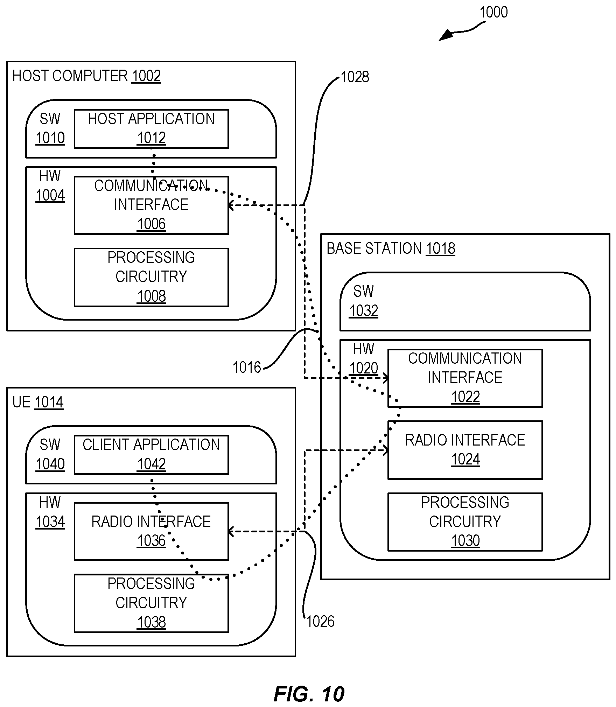

Example implementations, in accordance with an embodiment, of the UE, base station, and host computer discussed in the preceding paragraphs will now be described with reference to Figure 10. In a communication system 1000, a host computer 1002 comprises hardware 1004 including a communication interface 1006 configured to set up and maintain a wired or wireless connection with an interface of a different communication device of the communication system 1000. The host computer 1002 further comprises processing circuitry 1008, which may have storage and/or processing capabilities. In particular, the processing circuitry 1008 may comprise one or more programmable processors, ASICs, FPGAs, or combinations of these (not shown) adapted to execute instructions. The host computer 1002 further comprises software 1010, which is stored in or accessible by the host computer 1002 and executable by the processing circuitry 1008. The software 1010 includes a host application 1012. The host application 1012 may be operable to provide a service to a remote user, such as a UE 1014 connecting via an OTT connection 1016 terminating at the UE 1014 and the host computer 1002. In providing the service to the remote user, the host application 1012 may provide user data which is transmitted using the OTT connection 1016.

The communication system 1000 further includes a base station 1018 provided in a telecommunication system and comprising hardware 1020 enabling it to communicate with the host computer 1002 and with the UE 1014. The hardware 1020 may include a communication interface 1022 for setting up and maintaining a wired or wireless connection with an interface of a different communication device of the communication system 1000, as well as a radio interface 1024 for setting up and maintaining at least a wireless connection 1026 with the UE 1014 located in a coverage area (not shown in Figure 10) served by the base station 1018. The communication interface 1022 may be configured to facilitate a connection 1028 to the host computer 1002. The connection 1028 may be direct or it may pass through a core network (not shown in Figure 10) of the telecommunication system and/or through one or more intermediate networks outside the telecommunication system. In the embodiment shown, the hardware 1020 of the base station 1018 further includes processing circuitry 1030, which may comprise one or more programmable processors, ASICs, FPGAs, or combinations of these (not shown) adapted to execute instructions. The base station 1018 further has software 1032 stored internally or accessible via an external connection.

The communication system 1000 further includes the UE 1014 already referred to. The UE's 1014 hardware 1034 may include a radio interface 1036 configured to set up and maintain a wireless connection 1026 with a base station serving a coverage area in which the UE 1014 is currently located. The hardware 1034 of the UE 1014 further includes processing circuitry 1038, which may comprise one or more programmable processors, ASICs, FPGAs, or combinations of these (not shown) adapted to execute instructions. The UE 1014 further comprises software 1040, which is stored in or accessible by the UE 1014 and executable by the processing circuitry 1038. The software 1040 includes a client application 1042. The client application 1042 may be operable to provide a service to a human or non-human user via the UE 1014, with the support of the host computer 1002. In the host computer 1002, the executing host application 1012 may communicate with the executing client application 1042 via the OTT connection 1016 terminating at the UE 1014 and the host computer 1002. In providing the service to the user, the client application 1042 may receive request data from the host application 1012 and provide user data in response to the request data. The OTT connection 1016 may transfer both the request data and the user data. The client application 1042 may interact with the user to generate the user data that it provides.

It is noted that the host computer 1002, the base station 1018, and the UE 1014 illustrated in Figure 10 may be similar or identical to the host computer 916, one of the base stations 906A, 906B, 906C, and one of the UEs 912, 914 of Figure 9, respectively. This is to say, the inner workings of these entities may be as shown in Figure 10 and independently, the surrounding network topology may be that of Figure 9.

In Figure 10, the OTT connection 1016 has been drawn abstractly to illustrate the communication between the host computer 1002 and the UE 1014 via the base station 1018 without explicit reference to any intermediary devices and the precise routing of messages via these devices. The network infrastructure may determine the routing, which may be configured to hide from the UE 1014 or from the service provider operating the host computer 1002, or both. While the OTT connection 1016 is active, the network infrastructure may further take decisions by which it dynamically changes the routing (e.g., on the basis of load balancing consideration or reconfiguration of the network).

The wireless connection 1026 between the UE 1014 and the base station 1018 is in accordance with the teachings of the embodiments described throughout this disclosure. One or more of the various embodiments improve the performance of OTT services provided to the UE 1014 using the OTT connection 1016, in which the wireless connection 1026 forms the last segment. More precisely, the teachings of these embodiments may improve, e.g., the data rate and/or latency and thereby provide benefits such as, e.g., reduced user waiting time, relaxed restriction on file size, and/or better responsiveness.

A measurement procedure may be provided for the purpose of monitoring data rate, latency, and other factors on which the one or more embodiments improve. There may further be an optional network functionality for reconfiguring the OTT connection 1016 between the host computer 1002 and the UE 1014, in response to variations in the measurement results. The measurement procedure and/or the network functionality for reconfiguring the OTT connection 1016 may be implemented in the software 1010 and the hardware 1004 of the host computer 1002 or in the software 1040 and the hardware 1034 of the UE 1014, or both. In some embodiments, sensors (not shown) may be deployed in or in association with communication devices through which the OTT connection 1016 passes; the sensors may participate in the measurement procedure by supplying values of the monitored quantities exemplified above, or supplying values of other physical quantities from which the software 1010, 1040 may compute or estimate the monitored quantities. The reconfiguring of the OTT connection 1016 may include message format, retransmission settings, preferred routing, etc.; the reconfiguring need not affect the base station 1018, and it may be unknown or imperceptible to the base station 1018. Such procedures and functionalities may be known and practiced in the art. In certain embodiments, measurements may involve proprietary UE signaling facilitating the host computer 1002's measurements of throughput, propagation times, latency, and the like. The measurements may be implemented in that the software 1010 and 1040 causes messages to be transmitted, in particular empty or 'dummy' messages, using the OTT connection 1016 while it monitors propagation times, errors, etc.

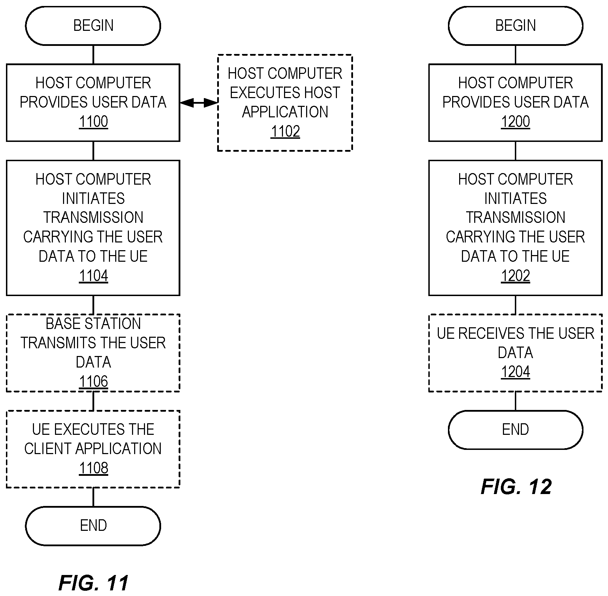

Figure 11 is a flowchart illustrating a method implemented in a communication system, in accordance with one embodiment. The communication system includes a host computer, a base station, and a UE which may be those described with reference to Figures 9 and 10. For simplicity of the present disclosure, only drawing references to Figure 11 will be included in this section. In step 1100, the host computer provides user data. In sub-step 1102 (which may be optional) of step 1100, the host computer provides the user data by executing a host application. In step 1104, the host computer initiates a transmission carrying the user data to the UE. In step 1106 (which may be optional), the base station transmits to the UE the user data which was carried in the transmission that the host computer initiated, in accordance with the teachings of the embodiments described throughout this disclosure. In step 1108 (which may also be optional), the UE executes a client application associated with the host application executed by the host computer.

Figure 12 is a flowchart illustrating a method implemented in a communication system, in accordance with one embodiment. The communication system includes a host computer, a base station, and a UE which may be those described with reference to Figures 9 and 10. For simplicity of the present disclosure, only drawing references to Figure 12 will be included in this section. In step 1200 of the method, the host computer provides user data. In an optional sub-step (not shown) the host computer provides the user data by executing a host application. In step 1202, the host computer initiates a transmission carrying the user data to the UE. The transmission may pass via the base station, in accordance with the teachings of the embodiments described throughout this disclosure. In step 1204 (which may be optional), the UE receives the user data carried in the transmission.

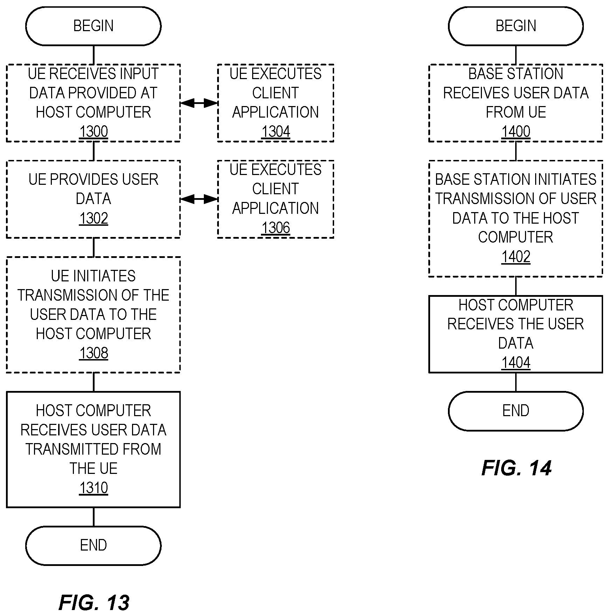

Figure 13 is a flowchart illustrating a method implemented in a communication system, in accordance with one embodiment. The communication system includes a host computer, a base station, and a UE which may be those described with reference to Figures 9 and 10. For simplicity of the present disclosure, only drawing references to Figure 13 will be included in this section. In step 1300 (which may be optional), the UE receives input data provided by the host computer. Additionally or alternatively, in step 1302, the UE provides user data. In sub-step 1304 (which may be optional) of step 1300, the UE provides the user data by executing a client application. In sub-step 1306 (which may be optional) of step 1302, the UE executes a client application which provides the user data in reaction to the received input data provided by the host computer. In providing the user data, the executed client application may further consider user input received from the user. Regardless of the specific manner in which the user data was provided, the UE initiates, in sub-step 1308 (which may be optional), transmission of the user data to the host computer. In step 1310 of the method, the host computer receives the user data transmitted from the UE, in accordance with the teachings of the embodiments described throughout this disclosure.

Figure 14 is a flowchart illustrating a method implemented in a communication system, in accordance with one embodiment. The communication system includes a host computer, a base station, and a UE which may be those described with reference to Figures 9 and 10. For simplicity of the present disclosure, only drawing references to Figure 14 will be included in this section. In step 1400 (which may be optional), in accordance with the teachings of the embodiments described throughout this disclosure, the base station receives user data from the UE. In step 1402 (which may be optional), the base station initiates transmission of the received user data to the host computer. In step 1404 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

**Claims**

1. A method performed by a network node for radio resource arbitration for spectrum sharing between a first radio access technology, RAT, and a second RAT, the method comprising:
for a non-Multicast Broadcast Single Frequency Network, MBSFN, subframe:

   determining (500) whether non-latency-sensitive traffic for the first RAT can be delayed to one or more next MBSFN subframes; and
   upon determining (500) that non-latency-sensitive traffic for the first RAT can be delayed, determining (502) an amount of non-latency-sensitive traffic for the first RAT to be delayed until the one or more next MBSFN subframes.

2. The method of claim 1 wherein the one or more next MBSFN subframes are one or more next MBSFN subframes before a next non-MBSFN subframe for which non-latency-sensitive traffic for the first RAT has higher priority.

3. The method of claim 1 or 2 wherein determining (500) whether non-latency-sensitive traffic for the first RAT can be delayed to the one or more next MBSFN subframes comprises determining (500) whether non-latency-sensitive traffic for the first RAT can be delayed to the one or more next MBSFN subframes based on:

   a) estimated total number of resource blocks, RBs, based on cell demand for both the first RAT and the second RAT relative to a number of RBs available to Physical Downlink Shared Channel, PDSCH, in the non-MBSFN subframe for a given system bandwidth,
   b) number of RBs required to meet cell demand of non-latency-sensitive traffic for the first RAT,
   c) estimated total number of RBs available for downlink traffic for the first RAT in the one or more next MBSFN subframes before the next non-MBSFN subframe for which non-latency-sensitive traffic for the first RAT has higher priority,
   d) amount of time between the non-MBSFN subframe and the one or more next MBSFN subframes, or
   e) a combination of any two or more of a) - d).

4. The method of claim 1 or 2 wherein determining (500) whether non-latency-sensitive traffic for the first RAT can be delayed to the one or more next MBSFN subframes comprises:

   determining (500A) an amount of overflow traffic; and
   determining (500B) whether the amount of overflow traffic is greater than zero and whether a cell demand from non-delay sensitive traffic for the first RAT is greater than zero;
   wherein determining (500) whether non-latency-sensitive traffic for the first RAT can be delayed comprises determining (500) that non-latency sensitive traffic for the first RAT can be delayed responsive to determining (500B, YES)

      - that the amount of overflow traffic is greater than zero and that the cell demand from non-delay sensitive traffic for the first RAT is greater than zero, or
      - that the amount of overflow traffic is greater than zero, that the cell demand from non-delay sensitive traffic for the first RAT is greater than zero, and that a delay until the next MBSFN subframe is either 1 or 2 subframes.

5. The method of claim 4 wherein the amount of overflow traffic is defined as a cell demand from total downlink traffic for the first RAT including both delay-sensitive and non-delay-sensitive traffic plus a cell demand from total downlink traffic for the second RAT minus a number of RBs available to PDSCH in the non-MBSFN subframe.

6. The method of any of claims 1 to 5 wherein determining (502) the amount of non-latency-sensitive traffic for the first RAT to be delayed comprises determining (502) the amount of non-latency-sensitive traffic for the first RAT to be delayed based on:

i) estimated total number of resource blocks, RBs, based on cell demand for both the first RAT and the second RAT relative to a number of RBs available to PDSCH in the non-MBSFN subframe for a given system bandwidth,
ii) number of RBs required to meet cell demand of non-latency-sensitive traffic for the first RAT,
iii) estimated the total number of RBs available for downlink traffic for the first RAT in the one or more next MBSFN subframes before the next non-MBSFN subframe for which NR non-delay sensitive traffic has higher priority,
iv) amount of time between the non-MBSFN subframe and the one or more next MBSFN subframes, or
v) a combination of any two or more of i) - iv).

7. The method of any of claims 1 to 5 wherein determining (502) the amount of non-latency-sensitive traffic for the first RAT to be delayed comprises:

estimating (502A) a total number of available RBs for non-delay-sensitive traffic for the first RAT in the one or more next MBSFN subframes before the next non-MBSFN subframe for which non-latency-sensitive traffic for the first RAT has higher priority;
determining (502B) the amount of non-latency-sensitive traffic for the first RAT to be delayed based on the estimated number of available RBs for non-delay-sensitive traffic for the first RAT in the one or more next MBSFN subframes.

8. The method of claim 7 wherein estimating (502A) the number of available RBs for non-delay-sensitive traffic for the first RAT in the one or more next MBSFN subframes comprises estimating (502A) the number of available RBs for non-delay-sensitive traffic for the first RAT in the one or more next MBSFN subframes based on a difference between a system bandwidth and a number of RBs that cannot be used for PDSCH in the one or more next MBSFN subframes for a physical downlink shared channel for the first RAT.

9. The method of claim 8 wherein estimating (502A) the number of available RBs for non-delay-sensitive traffic for the first RAT in the one or more next MBSFN subframes

- is further based on a scaling factor that can be predefined or dynamically updated based on interference measurement, and / or
- is further based on a predefined constant.

10. The method of claim 7 wherein estimating (502A) the number of available RBs for non-delay-sensitive traffic for the first RAT in the one or more next MBSFN subframes comprises estimating (502A) the number of available RBs for non-delay-sensitive traffic for the first RAT in the one or more next MBSFN subframes based on

- an average number of used RBs in the previous MBSFN subframes, or
- an estimated average number of RBs needed for new downlink traffic arriving in each subframe for the first RAT, or
- an amount of time between the non-MBSFN subframe and the one or more next MBSFN subframes.

11. The method of any of claims 7 to 10 wherein determining (502B) the amount of non-latency-sensitive traffic for the first RAT to be delayed comprises determining (502B) the amount of non-latency-sensitive traffic for the first RAT to be delayed as a minimum value among: A) amount of overflow traffic, B) a cell demand for non-delay-sensitive traffic for the first RAT, and C) the estimated total number of available RBs for non-delay-sensitive traffic for the first RAT in the one or more next MBSFN subframes before the next non-MBSFN subframe for which non-latency-sensitive traffic for the first RAT has higher priority.

12. The method of any of claims 1 to 11 further comprising performing (504) one or more additional actions for radio resource arbitration for the non-MBSFN subframe based on a reduced cell demand for non-delay-sensitive traffic for the first RAT, the reduced cell demand for non-delay-sensitive traffic for the first RAT being based on the determined amount of non-latency-sensitive traffic for the first RAT to be delayed.

13. The method of any of claims 1 to 12 wherein the non-MBSFN subframe is a non-MBSFN subframe for which a priority of non-delay-sensitive traffic for the first RAT is greater than a priority of non-delay-sensitive traffic for the second RAT.

14. The method of any of claims 1 to 13 wherein the first RAT is New Radio, NR, and the second RAT is Long Term Evolution, LTE.

15. A network node (600; 206) for radio resource arbitration for spectrum sharing between a first radio access technology, RAT, and a second RAT, the network node (600; 206) adapted to perform the method of any of claims 1 to 14.

16. The network node (600; 206) according to claim 15, comprising processing circuitry configured to cause the network node (600; 206) to perform the method of any of claims 1 to 14.

17. A non-transitory computer-readable medium comprising instructions executable by processing circuitry of a network node for radio resource arbitration for spectrum sharing between a first radio access technology, RAT, and a second RAT, whereby the network node is caused to:
for a non-Multicast Broadcast Single Frequency Network, MBSFN, subframe:

determine (500) whether non-latency-sensitive traffic for the first RAT can be delayed to one or more next MBSFN subframes; and
upon determining (500) that non-latency-sensitive traffic for the first RAT can be delayed, determine (502) an amount of non-latency-sensitive traffic for the first RAT to be delayed until the one or more next MBSFN subframes.


**Patentansprüche**

1. Ein Verfahren, das von einem Netzwerkknoten zur Funkressourcenarbitrierung zur gemeinsamen Nutzung von Spektren zwischen einer ersten Funkzugangstechnologie, RAT, und einer zweiten RAT durchgeführt wird, wobei das Verfahren Folgendes beinhaltet:
für einen Nicht-Multicast-Broadcast-Einzelfrequenznetzwerk-Unterrahmen, MBSFN-Unterrahmen:

Bestimmen (500), ob nicht latenzempfindlicher Verkehr für die erste RAT auf einen oder mehrere nächste MBSFN-Unterrahmen verzögert werden kann; und
beim Bestimmen (500), dass nicht latenzempfindlicher Verkehr für die erste RAT verzögert werden kann, Bestimmen (502) einer Menge an nicht latenzempfindlichem Verkehr für die erste RAT, die bis zu dem einen oder den mehreren nächsten MBSFN-Unterrahmen verzögert werden soll.

2. Verfahren gemäß Anspruch 1, wobei der eine oder die mehreren nächsten MBSFN-Unterrahmen ein oder mehrere nächste MBSFN-Unterrahmen vor einem nächsten Nicht-MBSFN-Unterrahmen sind, für den nicht latenzempfindlicher Verkehr für die erste RAT eine höhere Priorität hat.

3. Verfahren gemäß Anspruch 1 oder 2, wobei das Bestimmen (500), ob nicht latenzempfindlicher Verkehr für die erste RAT auf den einen oder die mehreren nächsten MBSFN-Unterrahmen verzögert werden kann, das Bestimmen (500) beinhaltet, ob nicht latenzempfindlicher Verkehr für die erste RAT auf den einen oder die mehreren nächsten MBSFN-Unterrahmen verzögert werden kann, basierend auf Folgendem:

a) einer geschätzten Gesamtanzahl von Ressourcenblöcken, RBs, basierend auf einem Zellbedarf für sowohl die erste RAT als auch die zweite RAT relativ zu einer Anzahl von RBs, die für einen gemeinsam genutzten physikalischen Downlink-Kanal, PDSCH, in dem Nicht-MBSFN-Unterrahmen für eine gegebene Systembandbreite verfügbar sind,
b) einer Anzahl von RBs, die erforderlich sind, um einen Zellbedarf von nicht latenzempfindlichem Verkehr für die erste RAT zu erfüllen,
c) einer geschätzten Gesamtanzahl von RBs, die für Downlink-Verkehr für die erste RAT in dem einen oder den mehreren nächsten MBSFN-Unterrahmen vor dem nächsten Nicht-MBSFN-Unterrahmen verfügbar sind, für den nicht latenzempfindlicher Verkehr für die erste RAT eine höhere Priorität hat,
d) einer Zeitdauer zwischen dem Nicht-MBSFN-Unterrahmen und dem einen oder den mehreren nächsten MBSFN-Unterrahmen, oder
e) einer Kombination von beliebigen zwei oder mehr von a)-d).

4. Verfahren gemäß Anspruch 1 oder 2, wobei das Bestimmen (500), ob nicht latenzempfindlicher Verkehr für die erste RAT auf den einen oder die mehreren nächsten MBSFN-Unterrahmen verzögert werden kann, Folgendes beinhaltet:

Bestimmen (500A) einer Menge an Überlaufverkehr; und

Bestimmen (500B), ob die Menge an Überlaufverkehr größer als null ist und ob ein Zellbedarf von nicht verzögerungsempfindlichem Verkehr für die erste RAT größer als null ist;

wobei das Bestimmen (500), ob nicht latenzempfindlicher Verkehr für die erste RAT verzögert werden kann, das Bestimmen (500) beinhaltet, dass nicht latenzempfindlicher Verkehr für die erste RAT als Reaktion auf das Bestimmen (500B, JA) verzögert werden kann,

- dass die Menge an Überlaufverkehr größer als null ist und dass der Zellbedarf von nicht verzögerungsempfindlichem Verkehr für die erste RAT größer als null ist, oder
- dass die Menge an Überlaufverkehr größer als null ist, dass der Zellbedarf von nicht verzögerungsempfindlichem Verkehr für die erste RAT größer als null ist und dass eine Verzögerung bis zu dem nächsten MBSFN-Unterrahmen entweder 1 oder 2 Unterrahmen beträgt.

5. Verfahren gemäß Anspruch 4, wobei die Menge an Überlaufverkehr als ein Zellbedarf von Gesamt-Downlink-Verkehr für die erste RAT definiert ist, der sowohl verzögerungsempfindlichen als auch nicht verzögerungsempfindlichen Verkehr plus einen Zellbedarf von Gesamt-Downlink-Verkehr für die zweite RAT minus eine Anzahl von RBs umfasst, die für PDSCH in dem Nicht-MBSFN-Unterrahmen verfügbar sind.

6. Verfahren gemäß einem der Ansprüche 1 bis 5, wobei das Bestimmen (502) der Menge an nicht latenzempfindlichem Verkehr für die erste RAT, die verzögert werden soll, das Bestimmen (502) der Menge an nicht latenzempfindlichem Verkehr für die erste RAT, die verzögert werden soll, basierend auf Folgendem beinhaltet:

i) einer geschätzten Gesamtanzahl von Ressourcenblöcken, RBs, basierend auf einem Zellbedarf für sowohl die erste RAT als auch die zweite RAT relativ zu einer Anzahl von RBs, die für PDSCH in dem Nicht-MBSFN-Unterrahmen für eine gegebene Systembandbreite verfügbar sind,
ii) einer Anzahl von RBs, die erforderlich sind, um einen Zellbedarf von nicht latenzempfindlichem Verkehr für die erste RAT zu erfüllen,
iii) einer geschätzten Gesamtanzahl von RBs, die für Downlink-Verkehr für die erste RAT in dem einen oder den mehreren nächsten MBSFN-Unterrahmen vor dem nächsten Nicht-MBSFN-Unterrahmen verfügbar sind, für den nicht verzögerungsempfindlicher Verkehr eine höhere Priorität hat,
iv) einer Zeitdauer zwischen dem Nicht-MBSFN-Unterrahmen und dem einen oder den mehreren nächsten MBSFN-Unterrahmen, oder
v) einer Kombination von beliebigen zwei oder mehr von i)-iv).

7. Verfahren gemäß einem der Ansprüche 1 bis 5, wobei das Bestimmen (502) der Menge an nicht latenzempfindlichem Verkehr für die erste RAT, die verzögert werden soll, Folgendes beinhaltet:

Schätzen (502A) einer Gesamtanzahl von verfügbaren RBs für nicht verzögerungsempfindlichen Verkehr für die erste RAT in dem einen oder den mehreren nächsten MBSFN-Unterrahmen vor dem nächsten Nicht-MBSFN-Unterrahmen, für den nicht latenzempfindlicher Verkehr für die erste RAT eine höhere Priorität hat;
Bestimmen (502B) der Menge an nicht latenzempfindlichem Verkehr für die erste RAT, die verzögert werden soll, basierend auf der geschätzten Anzahl von verfügbaren RBs für nicht verzögerungsempfindlichen Verkehr für die erste RAT in dem einen oder den mehreren nächsten MBSFN-Unterrahmen.

8. Verfahren gemäß Anspruch 7, wobei das Schätzen (502A) der Anzahl von verfügbaren RBs für nicht verzögerungsempfindlichen Verkehr für die erste RAT in dem einen oder den mehreren nächsten MBSFN-Unterrahmen das Schätzen (502A) der Anzahl von verfügbaren RBs für nicht verzögerungsempfindlichen Verkehr für die erste RAT in dem einen oder den mehreren nächsten MBSFN-Unterrahmen basierend auf einer Differenz zwischen einer Systembandbreite und einer Anzahl von RBs beinhaltet, die nicht für PDSCH in dem einen oder den mehreren nächsten MBSFN-Unterrahmen für einen gemeinsam genutzten physikalischen Downlink-Kanal für die erste RAT verwendet werden können.

9. Verfahren gemäß Anspruch 8, wobei das Schätzen (502A) der Anzahl von verfügbaren RBs für nicht verzögerungsempfindlichen Verkehr für die erste RAT in dem einen oder den mehreren nächsten MBSFN-Unterrahmen

- ferner auf einem Skalierungsfaktor basiert, der basierend auf Interferenzmessung vordefiniert oder dynamisch aktualisiert werden kann, und/oder
- ferner auf einer vordefinierten Konstante basiert.

**10.** Verfahren gemäß Anspruch 7, wobei das Schätzen (502A) der Anzahl von verfügbaren RBs für nicht verzögerungsempfindlichen Verkehr für die erste RAT in dem einen oder den mehreren nächsten MBSFN-Unterrahmen das Schätzen (502A) der Anzahl von verfügbaren RBs für nicht verzögerungsempfindlichen Verkehr für die erste RAT in dem einen oder den mehreren nächsten MBSFN-Unterrahmen basierend auf Folgendem beinhaltet:

- einer durchschnittlichen Anzahl von verwendeten RBs in den vorherigen MBSFN-Unterrahmen, oder
- einer geschätzten durchschnittlichen Anzahl von RBs, die für neuen Downlink-Verkehr benötigt werden, der in jedem Unterrahmen für die erste RAT ankommt, oder
- einer Zeitdauer zwischen dem Nicht-MBSFN-Unterrahmen und dem einen oder den mehreren nächsten MBSFN-Unterrahmen.

**11.** Verfahren gemäß einem der Ansprüche 7 bis 10, wobei das Bestimmen (502B) der Menge an nicht latenzempfindlichem Verkehr für die erste RAT, die verzögert werden soll, das Bestimmen (502B) der Menge an nicht latenzempfindlichem Verkehr für die erste RAT, die verzögert werden soll, als einen Minimalwert unter Folgendem beinhaltet: A) einer Menge an Überlaufverkehr, B) einem Zellbedarf für nicht verzögerungsempfindlichen Verkehr für die erste RAT, und C) der geschätzten Gesamtanzahl von verfügbaren RBs für nicht verzögerungsempfindlichen Verkehr für die erste RAT in dem einen oder den mehreren nächsten MBSFN-Unterrahmen vor dem nächsten Nicht-MBSFN-Unterrahmen, für den nicht latenzempfindlicher Verkehr für die erste RAT eine höhere Priorität hat.

**12.** Verfahren gemäß einem der Ansprüche 1 bis 11, das ferner das Durchführen (504) einer oder mehrerer zusätzlicher Aktionen zur Funkressourcenarbitrierung für den Nicht-MBSFN-Unterrahmen basierend auf einem reduzierten Zellbedarf für nicht verzögerungsempfindlichen Verkehr für die erste RAT beinhaltet, wobei der reduzierte Zellbedarf für nicht verzögerungsempfindlichen Verkehr für die erste RAT auf der bestimmten Menge an nicht latenzempfindlichem Verkehr für die erste RAT, die verzögert werden soll, basiert.

**13.** Verfahren gemäß einem der Ansprüche 1 bis 12, wobei der Nicht-MBSFN-Unterrahmen ein Nicht-MBSFN-Unterrahmen ist, für den eine Priorität von nicht verzögerungsempfindlichem Verkehr für die erste RAT größer als eine Priorität von nicht verzögerungsempfindlichem Verkehr für die zweite RAT ist.

**14.** Verfahren gemäß einem der Ansprüche 1 bis 13, wobei die erste RAT New Radio, NR, ist und die zweite RAT Long Term Evolution, LTE, ist.

**15.** Ein Netzwerkknoten (600; 206) zur Funkressourcenarbitrierung zur gemeinsamen Nutzung von Spektren zwischen einer ersten Funkzugangstechnologie, RAT, und einer zweiten RAT, wobei der Netzwerkknoten (600; 206) angepasst ist, um das Verfahren gemäß einem der Ansprüche 1 bis 14 durchzuführen.

**16.** Netzwerkknoten (600; 206) gemäß Anspruch 15, der eine Verarbeitungsschaltung beinhaltet, die konfiguriert ist, um den Netzwerkknoten (600; 206) zu veranlassen, das Verfahren gemäß einem der Ansprüche 1 bis 14 durchzuführen.

**17.** Ein nicht transitorisches computerlesbares Medium, das Anweisungen beinhaltet, die von einer Verarbeitungsschaltung eines Netzwerkknotens zur Funkressourcenarbitrierung zur gemeinsamen Nutzung von Spektren zwischen einer ersten Funkzugangstechnologie, RAT, und einer zweiten RAT ausführbar sind, wodurch der Netzwerkknoten zu Folgendem veranlasst wird:
für einen Nicht-Multicast-Broadcast-Einzelfrequenznetzwerk-Unterrahmen, MBSFN-Unterrahmen:

Bestimmen (500), ob nicht latenzempfindlicher Verkehr für die erste RAT auf einen oder mehrere nächste MBSFN-Unterrahmen verzögert werden kann; und
beim Bestimmen (500), dass nicht latenzempfindlicher Verkehr für die erste RAT verzögert werden kann, Bestimmen (502) einer Menge an nicht latenzempfindlichem Verkehr für die erste RAT, die bis zu dem einen oder den mehreren nächsten MBSFN-Unterrahmen verzögert werden soll.

**Revendications**

**1.** Un procédé réalisé par un nœud de réseau pour un arbitrage de ressources radio pour un partage de spectre entre une première technologie d'accès radio, RAT (*Radio Access Technology*), et une deuxième RAT, le procédé comprenant : pour une sous-trame non de réseau à fréquence unique de diffusion multidiffusion, MBSFN (*Multicast Broadcast Single Frequency Network*) :

la détermination (500) de si un trafic non sensible à la latence pour la première RAT peut être retardé vers une ou plusieurs sous-trames MBSFN suivantes ; et

lors de la détermination (500) qu'un trafic non sensible à la latence pour la première RAT peut être retardé, la détermination (502) d'une quantité de trafic non sensible à la latence pour la première RAT à retarder jusqu'aux une ou plusieurs sous-trames MBSFN suivantes.

2. Le procédé de la revendication 1 dans lequel les une ou plusieurs sous-trames MBSFN suivantes sont une ou plusieurs sous-trames MBSFN suivantes avant une sous-trame non-MBSFN suivante pour laquelle un trafic non sensible à la latence pour la première RAT a une priorité plus élevée.

3. Le procédé de la revendication 1 ou de la revendication 2 dans lequel la détermination (500) de si un trafic non sensible à la latence pour la première RAT peut être retardé vers les une ou plusieurs sous-trames MBSFN suivantes comprend la détermination (500) de si un trafic non sensible à la latence pour la première RAT peut être retardé vers les une ou plusieurs sous-trames MBSFN suivantes sur la base :

a) d'un nombre total estimé de blocs de ressources, RB (*Resource Blocks*), basé sur une demande de cellule à la fois pour la première RAT et la deuxième RAT par rapport à un nombre de RB disponibles pour un canal partagé de liaison descendante physique, PDSCH (*Physical Downlink Shared Channel*), dans la sous-trame non-MBSFN pour une largeur de bande de système donnée,
b) d'un nombre de RB requis pour satisfaire à une demande de cellule de trafic non sensible à la latence pour la première RAT,
c) d'un nombre total estimé de RB disponibles pour un trafic de liaison descendante pour la première RAT dans les une ou plusieurs sous-trames MBSFN suivantes avant la sous-trame non-MBSFN suivante pour laquelle un trafic non sensible à la latence pour la première RAT a une priorité plus élevée,
d) d'une quantité de temps entre la sous-trame non-MBSFN et les une ou plusieurs sous-trames MBSFN suivantes, ou
e) d'une combinaison de deux quelconques ou plus de a) à d).

4. Le procédé de la revendication 1 ou de la revendication 2 dans lequel la détermination (500) de si un trafic non sensible à la latence pour la première RAT peut être retardé vers les une ou plusieurs sous-trames MBSFN suivantes comprend :

la détermination (500A) d'une quantité de trafic de débordement ; et
la détermination (500B) de si la quantité de trafic de débordement est supérieure à zéro et de si une demande de cellule provenant d'un trafic non sensible au retard pour la première RAT est supérieure à zéro ;
dans lequel la détermination (500) de si un trafic non sensible à la latence pour la première RAT peut être retardé comprend la détermination (500) qu'un trafic non sensible à la latence pour la première RAT peut être retardé en réponse à la détermination (500B, OUI)

- que la quantité de trafic de débordement est supérieure à zéro et que la demande de cellule provenant d'un trafic non sensible au retard pour la première RAT est supérieure à zéro, ou
- que la quantité de trafic de débordement est supérieure à zéro, que la demande de cellule provenant d'un trafic non sensible au retard pour la première RAT est supérieure à zéro, et qu'un retard jusqu'à la sous-trame MBSFN suivante est de soit 1, soit 2 sous-trames.

5. Le procédé de la revendication 4 dans lequel la quantité de trafic de débordement est définie comme une demande de cellule provenant d'un trafic de liaison descendante total pour la première RAT incluant à la fois un trafic sensible au retard et un trafic non sensible au retard plus une demande de cellule provenant d'un trafic de liaison descendante total pour la deuxième RAT moins un nombre de RB disponibles pour un PDSCH dans la sous-trame non-MBSFN.

6. Le procédé de n'importe lesquelles des revendications 1 à 5 dans lequel la détermination (502) de la quantité de trafic non sensible à la latence pour la première RAT à retarder comprend la détermination (502) de la quantité de trafic non sensible à la latence pour la première RAT à retarder sur la base :

i) d'un nombre total estimé de blocs de ressources, RB, basé sur une demande de cellule à la fois pour la première RAT et la deuxième RAT par rapport à un nombre de RB disponibles pour le PDSCH dans la sous-trame non-MBSFN pour une largeur de bande de système donnée,
ii) d'un nombre de RB requis pour satisfaire à une demande de cellule de trafic non sensible à la latence pour la première RAT,

iii) d'un nombre total estimé de RB disponibles pour un trafic de liaison descendante pour la première RAT dans les une ou plusieurs sous-trames MBSFN suivantes avant la sous-trame non-MBSFN suivante pour laquelle un trafic non sensible au retard NR a une priorité plus élevée,

iv) d'une quantité de temps entre la sous-trame non-MBSFN et les une ou plusieurs sous-trames MBSFN suivantes, ou

v) d'une combinaison de deux quelconques ou plus de i) à iv).

7. Le procédé de n'importe lesquelles des revendications 1 à 5 dans lequel la détermination (502) de la quantité de trafic non sensible à la latence pour la première RAT à retarder comprend :

l'estimation (502A) d'un nombre total de RB disponibles pour un trafic non sensible au retard pour la première RAT dans les une ou plusieurs sous-trames MBSFN suivantes avant la sous-trame non-MBSFN suivante pour laquelle un trafic non sensible à la latence pour la première RAT a une priorité plus élevée ;

la détermination (502B) de la quantité de trafic non sensible à la latence pour la première RAT à retarder sur la base du nombre estimé de RB disponibles pour un trafic non sensible au retard pour la première RAT dans les une ou plusieurs sous-trames MBSFN suivantes.

8. Le procédé de la revendication 7 dans lequel l'estimation (502A) du nombre de RB disponibles pour un trafic non sensible au retard pour la première RAT dans les une ou plusieurs sous-trames MBSFN suivantes comprend l'estimation (502A) du nombre de RB disponibles pour un trafic non sensible au retard pour la première RAT dans les une ou plusieurs sous-trames MBSFN suivantes sur la base d'une différence entre une largeur de bande de système et un nombre de RB qui ne peuvent pas être utilisés pour un PDSCH dans les une ou plusieurs sous-trames MBSFN suivantes pour un canal partagé de liaison descendante physique pour la première RAT.

9. Le procédé de la revendication 8 dans lequel l'estimation (502A) du nombre de RB disponibles pour un trafic non sensible au retard pour la première RAT dans les une ou plusieurs sous-trames MBSFN suivantes

- est en outre basée sur un facteur d'échelle qui peut être prédéfini ou mis à jour dynamiquement sur la base d'une mesure d'interférence, et/ou
- est en outre basée sur une constante prédéfinie.

10. Le procédé de la revendication 7 dans lequel l'estimation (502A) du nombre de RB disponibles pour un trafic non sensible au retard pour la première RAT dans les une ou plusieurs sous-trames MBSFN suivantes comprend l'estimation (502A) du nombre de RB disponibles pour un trafic non sensible au retard pour la première RAT dans les une ou plusieurs sous-trames MBSFN suivantes sur la base

- d'un nombre moyen de RB utilisés dans les sous-trames MBSFN précédentes, ou
- d'un nombre moyen estimé de RB nécessaires pour un nouveau trafic de liaison descendante arrivant dans chaque sous-trame pour la première RAT, ou
- d'une quantité de temps entre la sous-trame non-MBSFN et les une ou plusieurs sous-trames MBSFN suivantes.

11. Le procédé de n'importe lesquelles des revendications 7 à 10 dans lequel la détermination (502B) de la quantité de trafic non sensible à la latence pour la première RAT à retarder comprend la détermination (502B) de la quantité de trafic non sensible à la latence pour la première RAT à retarder comme une valeur minimale parmi : A) une quantité de trafic de débordement, B) une demande de cellule pour un trafic non sensible au retard pour la première RAT, et C) le nombre total estimé de RB disponibles pour un trafic non sensible au retard pour la première RAT dans les une ou plusieurs sous-trames MBSFN suivantes avant la sous-trame non-MBSFN suivante pour laquelle un trafic non sensible à la latence pour la première RAT a une priorité plus élevée.

12. Le procédé de n'importe lesquelles des revendications 1 à 11 comprenant en outre la réalisation (504) d'une ou plusieurs actions supplémentaires pour un arbitrage de ressources radio pour la sous-trame non-MBSFN sur la base d'une demande de cellule réduite pour un trafic non sensible au retard pour la première RAT, la demande de cellule réduite pour un trafic non sensible au retard pour la première RAT étant basée sur la quantité déterminée de trafic non sensible à la latence pour la première RAT à retarder.

13. Le procédé de n'importe lesquelles des revendications 1 à 12 dans lequel la sous-trame non-MBSFN est une sous-trame non-MBSFN pour laquelle une priorité de trafic non sensible au retard pour la première RAT est supérieure à une priorité de trafic non sensible au retard pour la deuxième RAT.

14. Le procédé de n'importe lesquelles des revendications 1 à 13 dans lequel la première RAT est une nouvelle radio, NR, et la deuxième RAT est une évolution à long terme, LTE (*Long Term Evolution*).

15. Un nœud de réseau (600 ; 206) pour un arbitrage de ressources radio pour un partage de spectre entre une première technologie d'accès radio, RAT, et une deuxième RAT, le nœud de réseau (600 ; 206) étant adapté pour réaliser le procédé de n'importe lesquelles des revendications 1 à 14.

16. Le nœud de réseau (600 ; 206) selon la revendication 15, comprenant une circuiterie de traitement configurée pour amener le nœud de réseau (600 ; 206) à réaliser le procédé de n'importe lesquelles des revendications 1 à 14.

17. Un support lisible par ordinateur non transitoire comprenant des instructions exécutables par une circuiterie de traitement d'un nœud de réseau pour un arbitrage de ressources radio pour un partage de spectre entre une première technologie d'accès radio, RAT, et une deuxième RAT, moyennant quoi le nœud de réseau est amené à : pour une sous-trame non de réseau à fréquence unique de diffusion multidiffusion, MBSFN :

déterminer (500) si un trafic non sensible à la latence pour la première RAT peut être retardé vers une ou plusieurs sous-trames MBSFN suivantes ; et
lors de la détermination (500) qu'un trafic non sensible à la latence pour la première RAT peut être retardé, déterminer (502) une quantité de trafic non sensible à la latence pour la première RAT à retarder jusqu'aux une ou plusieurs sous-trames MBSFN suivantes.

*FIG. 1*

FIG. 2

FIG. 3

FIG. 4

FOR A NON-MBSFN SUBFRAME, DETERMINE WHETHER NON-DELAY-SENSITIVE NR DL TRAFFIC SHOULD BE DELAYED (E.G., UNTIL NEXT MBSFN SUBFRAME(S))
500

DETERMINE AMOUNT OF OVERFLOW TRAFFIC ($D_{overflow} = D_{NR} + D_{LTE} - N_{avail}$)
500A

$D_{overflow} > 0$
AND
$D_{NR}^{NS} > 0$?
500B

NO

YES

DETERMINE AMOUNT OF NON-DELAY-SENSITIVE NR DL TRAFFIC TO BE DELAYED (E.G., UNTIL NEXT MBSFN SUBFRAME(S))
502

ESTIMATE NUMBER OF AVAILABLE RBs FOR NON-DELAY-SENSITIVE TRAFFIC IN THE NEXT MBSFN SUBFRAME(S)
502A

DETERMINE NUMBER OF RBs OF NON-DELAY-SENSITIVE NR DL TRAFFIC TO BE DELAYED BASED ON THE ESTIMATED NUMBER OF AVAILABLE RBs FOR NON-DELAY-SENSITIVE TRAFFIC IN THE NEXT MBSFN SUBFRAME(S)
502B

$D_{reduction} = \min\{D_{overflow}, D_{NR}^{NS}, \text{sum}( M_{avail}^{MBSFN}(n+d))\}$
502B1

COMPLETE ARBITRATION PROCEDURE FOR THE NON-MBSFN SUBFRAME (E.G., BASED ON A REDUCED DEMAND FOR NON-DELAY-SENSITIVE NR DL TRAFFIC, E.G., $D_{NR}^{NS} = D_{NR}^{NS} - D_{reduction}$) AND NOTIFY THE SCHEDULERS
504

*FIG. 5*

600

616

CONTROL SYSTEM
602

NETWORK
INTERFACE
608

PROCESSOR(S)
604

MEMORY
606

RADIO UNIT(S)
610

TX(S) 612

RX(S) 614

616

*FIG. 6*

NETWORK NODE
600

MODULE(S)
800

*FIG. 8*

**FIG. 7**

EP 4 449 806 B1

**FIG. 9**

FIG. 10

BEGIN

HOST COMPUTER
PROVIDES USER DATA
1100

HOST COMPUTER
EXECUTES HOST
APPLICATION
1102

HOST COMPUTER
INITIATES
TRANSMISSION
CARRYING THE USER
DATA TO THE UE
1104

BASE STATION
TRANSMITS THE USER
DATA
1106

UE EXECUTES THE
CLIENT APPLICATION
1108

END

*FIG. 11*

BEGIN

HOST COMPUTER
PROVIDES USER DATA
1200

HOST COMPUTER
INITIATES
TRANSMISSION
CARRYING THE USER
DATA TO THE UE
1202

UE RECEIVES THE USER
DATA
1204

END

*FIG. 12*

```
        ┌─────────────┐
        │    BEGIN     │
        └──────┬──────┘
    ┌ ─ ─ ─ ─ ─│─ ─ ─ ┐      ┌ ─ ─ ─ ─ ─ ┐
      UE RECEIVES INPUT         UE EXECUTES
      DATA PROVIDED AT   ◄─────►   CLIENT
       HOST COMPUTER             APPLICATION
    │      1300       │  │      │    1304    │
    └ ─ ─ ─ ─ ─│─ ─ ─ ┘      └ ─ ─ ─ ─ ─ ┘
    ┌ ─ ─ ─ ─ ─│─ ─ ─ ┐      ┌ ─ ─ ─ ─ ─ ┐
     UE PROVIDES USER          UE EXECUTES
          DATA        ◄─────►     CLIENT
    │      1302       │  │      APPLICATION
                                 │  1306   │
    └ ─ ─ ─ ─ ─│─ ─ ─ ┘      └ ─ ─ ─ ─ ─ ┘
    ┌ ─ ─ ─ ─ ─│─ ─ ─ ┐
        UE INITIATES
     TRANSMISSION OF THE
      USER DATA TO THE
    │  HOST COMPUTER  │
            1308
    └ ─ ─ ─ ─ ─│─ ─ ─ ┘
        ┌──────┴──────┐
        │ HOST COMPUTER│
        │RECEIVES USER DATA│
        │TRANSMITTED FROM│
        │   THE UE     │
        │    1310      │
        └──────┬──────┘
        ┌──────┴──────┐
        │     END      │
        └─────────────┘
```

**FIG. 13**

```
        ┌─────────────┐
        │    BEGIN     │
        └──────┬──────┘
    ┌ ─ ─ ─ ─ ─│─ ─ ─ ┐
       BASE STATION
     RECEIVES USER DATA
         FROM UE
    │      1400       │
    └ ─ ─ ─ ─ ─│─ ─ ─ ┘
    ┌ ─ ─ ─ ─ ─│─ ─ ─ ┐
     BASE STATION INITIATES
     TRANSMISSION OF USER
      DATA TO THE HOST
    │    COMPUTER     │
            1402
    └ ─ ─ ─ ─ ─│─ ─ ─ ┘
        ┌──────┴──────┐
        │HOST COMPUTER │
        │RECEIVES THE USER│
        │    DATA      │
        │    1404      │
        └──────┬──────┘
        ┌──────┴──────┐
        │     END      │
        └─────────────┘
```

**FIG. 14**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021246925 A1

- WO 2020167221 A1

**Non-patent literature cited in the description**

- **URSULA CHALLITA et al.** *Deep Reinforcement Learning for Dynamic Spectrum Sharing of LTE and NR*, 22 February 2021
- LTE/NR spectrum sharing. *3GPP DRAFT; R4-2001386, 3GPP*, 14 February 2020, vol. 48 (48)

- **LG ELECTRONICS**. Remaining details on DL sharing between LTE and NR. *3GPP DRAFT; R1-1713219 - REMAINING DETAILS ON DL SHARING BETWEEN LTE AND NR, 3GPP*, 20 August 2017, vol. RAN WG1